(19) Europäisches Patentamt
European Patent Office
Office européen des brevets

(11) **EP 4 598 240 A1**

(12) **EUROPEAN PATENT APPLICATION**
published in accordance with Art. 153(4) EPC

(43) Date of publication:
06.08.2025 Bulletin 2025/32

(21) Application number: 23872878.6

(22) Date of filing: 13.09.2023

(51) International Patent Classification (IPC):
*H04W 74/00* (2009.01)    *H04W 74/08* (2024.01)
*H04L 1/08* (2006.01)    *H04L 5/00* (2006.01)

(52) Cooperative Patent Classification (CPC):
H04L 1/08; H04L 5/00; H04W 74/00; H04W 74/08

(86) International application number:
PCT/KR2023/013725

(87) International publication number:
WO 2024/071759 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.09.2022 KR 20220121939

(71) Applicant: LG Electronics Inc.
Yeongdeungpo-gu
Seoul 07336 (KR)

(72) Inventors:
• SHIN, Seokmin
Seoul 06772 (KR)
• KO, Hyunsoo
Seoul 06772 (KR)
• BAE, Duckhyun
Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **METHOD AND DEVICE FOR TRANSMISSION AND RECEPTION OF RANDOM ACCESS CHANNEL IN WIRELESS COMMUNICATION SYSTEM**

(57)    A method performed by a terminal, according to an embodiment of the present disclosure, comprises the steps of: transmitting a PRACH on the basis of at least one RO; and receiving an RAR. The at least one RO comprises a plurality of ROs belonging to an RO group for multi-transmission of the PRACH. The plurality of ROs comprises i) a first RO and ii) at least one second RO. The at least one second RO is characterized by comprising ROs determined in the ascending order of time resource indexes after the first RO, on the basis of a frequency resource index related to the first RO.

[FIG. 7]

**Description**

[TECHNICAL FIELD]

The present disclosure relates to a method and a device for transmission and reception of a random access channel in a wireless communication system.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

According to a current PRACH configuration, a plurality of PRACH occasions (ROs) with the same beam index (e.g., SS/PBCH block index or SSB index) can exist in a form to be frequency division multiplexed (FDMed) at a specific time instance. When determining an RO group for multiple PRACH transmissions, a terminal needs to decide at which frequency position the RO is selected to constitute the RO group.

[DISCLOSURE]

[TECHNICAL PROBLEM]

As described above, there may be multiple ROs FDMed at one time instance. A conventional scheme does not provide any definition for determining an RO group for multiple PRACH transmissions. Therefore, ambiguity arises in a terminal/base station operation with respect to the determination of the RO group. As a specific example, it is unclear on a terminal side on which RO the determination of the RO group should be configured based. In such a case, the base station may process multiple PRACH transmissions based on the RO group of one terminal as PRACH transmissions from multiple terminals. Conversely, the base station may process the PRACH transmissions from multiple terminals as a PRACH transmission based on the RO group of one terminal.

The present disclosure provides a method for removing an ambiguity in determining the RO group for multiple PRACH transmissions.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) in a wireless communication system according to an embodiment of the present dsiclosure comprises transmitting a physical random access channel (PRACH) based on at least one PRACH occasion (RO) and receiving a random access response (RAR).

The at least one RO includes a plurality of ROs belonging to an RO group for multiple transmissions of the PRACH.

The plurality of ROs are related to a same synchronization signal/physical broadcast channel block index (SS/PBCH block index).

The plurality of ROs include i) a first RO and ii) one or more second ROs.

The one or more second ROs include ROs determined in an increasing order of time resource indexes after the first RO, based on a frequency resource index related to the first RO.

The first RO may be a starting RO of the RO group, and the one or more second ROs may be remaining ROs of the RO group.

A frequency resource index related to the one or more second ROs may be the same as the frequency resource index related to the first RO.

The frequency resource index related to the first RO may be related to a resource block (RB).

The RO group may be one of a plurality of RO groups related to the same SS/PBCH block index.

A first RO of a first RO group among the plurality of RO groups may be related to a lowest frequency resource index.

A first RO of each of the plurality of RO groups may be i) determined in an increasing order of a frequency resource index with respect to a same time resource index, and ii) then determined in an increasing order of a time resource index with respect to a same frequency resource index.

A frequency resource index and/or a time resource index related to a first RO of one of the plurality of RO groups may be different from a frequency resource index and/or a time resource index related to a first RO of another one among the plurality of RO groups.

The first RO may be based on one of ROs frequency division multiplexed (FDMed) in one time instance.

The method may further comprise receiving configuration information related to the PRACH. The configuration information may include information for a number of multiple transmissions. The number of plurality of ROs may be based on the number of multiple transmissions.

A user equipment operating in a wireless communication system according to another embodiment of the present dsiclosure comprises one or more transceivers, one or more processors, and one or more memories operably connectable to the one or more processors, and storing instructions of configuring the one or more processors to perform operations based on being executed by the one or more processors.

The operations include transmitting a physical random access channel (PRACH) based on at least one PRACH occasion (RO) and receiving a random access response (RAR).

The at least one RO includes a plurality of ROs belonging to an RO group for multiple transmissions of the PRACH.

The plurality of ROs are related to a same synchronization signal/physical broadcast channel block index (SS/PBCH block index).

The plurality of ROs include i) a first RO and ii) one or more second ROs.

The one or more second ROs include ROs determined in an increasing order of time resource indexes after the first RO, based on a frequency resource index related to the first RO.

A device according to another embodiment of the present dsiclosure comprises one or more memories and one or more processors functionally connected to the one or more memories.

The one or more memories include instructions of configuring the one or more processors to perform operations based on being executed by the one or more processors.

The operations include transmitting a physical random access channel (PRACH) based on at least one PRACH occasion (RO) and receiving a random access response (RAR).

The at least one RO includes a plurality of ROs belonging to an RO group for multiple transmissions of the PRACH.

The plurality of ROs are related to a same synchronization signal/physical broadcast channel block index (SS/PBCH block index).

The plurality of ROs include i) a first RO and ii) one or more second ROs.

The one or more second ROs include ROs determined in an increasing order of time resource indexes after the first RO, based on a frequency resource index related to the first RO.

One or more non-transitory computer-readable media according to another embodiment of the present dsiclosure stores one or more instructions.

The one or more instructions executable by one or more processors are configured to allow the one or more processors to perform operations.

The operations include transmitting a physical random access channel (PRACH) based on at least one PRACH occasion (RO) and receiving a random access response (RAR).

The at least one RO includes a plurality of ROs belonging to an RO group for multiple transmissions of the PRACH.

The plurality of ROs are related to a same synchronization signal/physical broadcast channel block index (SS/PBCH block index).

The plurality of ROs include i) a first RO and ii) one or more second ROs.

The one or more second ROs include ROs determined in an increasing order of time resource indexes after the first RO, based on a frequency resource index related to the first RO.

A method performed by a base station in a wireless communication system according to another embodiment of the present dsiclosure comprises receiving a physical random access channel (PRACH) based on at least one PRACH occasion (RO) and transmitting a random access response (RAR).

The at least one RO includes a plurality of ROs belonging to an RO group for multiple transmissions of the PRACH by a UE.

The plurality of ROs are related to a same synchronization signal/physical broadcast channel block index (SS/PBCH block index).

The plurality of ROs include i) a first RO and ii) one or more second ROs.

The one or more second RO include ROs determined in an increasing order of time resource indexes after the first RO, based on a frequency resource index related to the first RO.

A base station operating in a wireless communication system according to another embodiment of the present dsiclosure comprise one or more transceivers, one or more processors, and one or more memories operably connectable to the one or more processors, and storing instructions of configuring the one or more processors to perform operations based on being executed by the one or more processors.

The operations include receiving a physical random access channel (PRACH) based on at least one PRACH occasion (RO) and transmitting a random access response (RAR).

The operations include receiving a physical random access channel (PRACH) based on at least one PRACH occasion (RO) and transmitting a random access response (RAR).

The at least one RO includes a plurality of ROs belonging to an RO group for multiple transmissions of the PRACH by a UE.

The plurality of ROs are related to a same synchronization signal/physical broadcast channel block index (SS/PBCH block index).

The plurality of ROs include i) a first RO and ii) one or more second ROs.

The one or more second RO include ROs determined in an increasing order of time resource indexes after the first RO, based on a frequency resource index related to the first RO.

[ADVANTAGEOUS EFFECTS]

According to an embodiment of the present disclosure, for multiple transmissions of a PRACH, ROs belonging to an RO group are defined in the ascending order of time resource indexes based on a frequency resource index related to a first RO. A problem can be solved in that there is an ambiguity regarding on which ROs the PRACH should be transmitted multiple times based when there are multiple ROs related to the same SS/PBCH block index.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates physical channels and general signal transmission used in a 3GPP system.

FIG. 2 illustrates an SSB architecture.

FIG. 3 illustrates SSB transmission.

FIG. 4 illustrates RACH occasions for each preamble format.

FIG. 5 illustrates a random access procedure.

FIG. 6 illustrates determination of an RO group according to an embodiment of the present disclosure.

FIG. 7 is a flowchart for describing a method performed by a user equipment (UE) according to an embodiment of the present disclosure.

FIG. 8 is a flowchart for describing a method performed by a base station (BS) according to another embodiment of the present disclosure.

FIG. 9 is a diagram illustrating configurations of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Physical Channel and General Signal Transmission

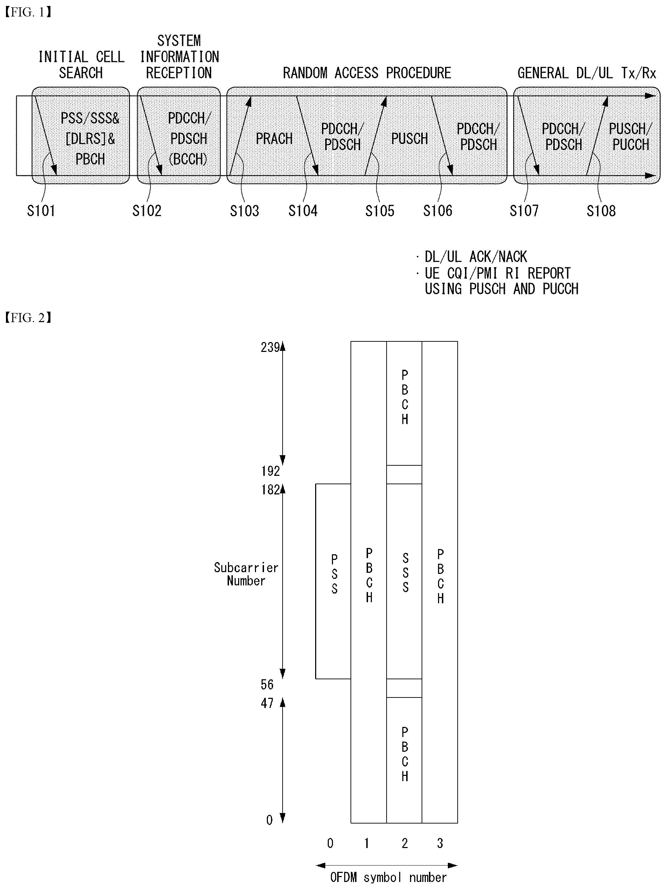

FIG. 1 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S101). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S102).

Meanwhile, when there is no radio resource first accessing the eNB or for signal transmission, the UE may perform a Random Access Procedure (RACH) to the eNB (S103 to S106). To this end, the UE may transmit a specific sequence to a preamble through a Physical Random Access Channel (PRACH) (S103 and S105) and receive a response message (Random Access Response (RAR) message) for the preamble through the PDCCH and a corresponding PDSCH. In the case of a contention based RACH, a Contention Resolution Procedure may be additionally performed (S106).

The UE that performs the above procedure may then perform PDCCH/PDSCH reception (S107) and Physical Uplink Shared Channel (PUSCH)/Physical Uplink Control Channel (PUCCH) transmission (S108) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

Synchronization signal block (SSB) transmission and related operation

FIG. 2 illustrates an SSB architecture.

The UE may perform cell search, system information acquisition, beam alignment for initial access, DL measurement, etc., based on an SSB. The SSB is mixedly used with an SS/synchronization signal/physical broadcast channel (PBCH) block.

Referring to FIG. 2, the SSB is constituted by a PSS, an SSS, and a PBCH. The SSB is constituted by four consecutive OFDM symbols and the PSS, the PBCH, the SSS/PBCH, and the PBCH are transmitted for each OFDM symbol. Each of the PSS and the SSS may be constituted by one OFDM symbol and 127 subcarriers and the PBCH is constituted by 3 OFDM symbols and 576 subcarriers. Polar coding and quadrature phase shift keying (QPSK) are applied to the PBCH. The PBCH is constituted by a data RE and a demodulation reference signal (DMRS) RE for each OFDM symbol. Three DMRS REs exist for each RB, and three data REs exist between DMRS REs.

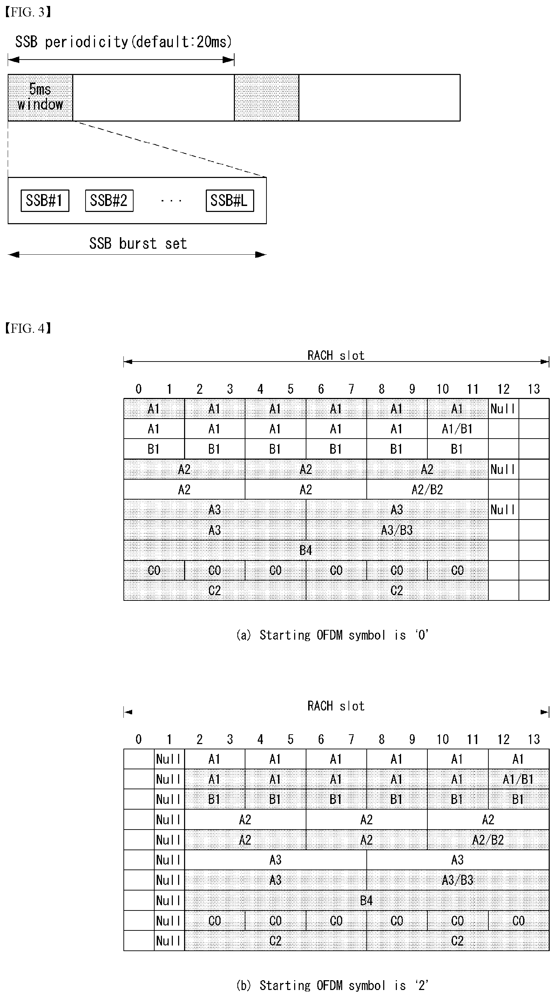

FIG. 3 illustrates SSB transmission.

Referring to FIG. 3, the SSB is periodically transmitted according to SSB periodicity. An SSB basic periodicity assumed by the UE in initial cell search is defined as 20 ms. After cell connection, the SSB periodicity may be configured as one of {5 ms, 10 ms, 20 ms, 40 ms, 80 ms, 160 ms} by a network (e.g., base station (BS)). At a start part of the SSB periodicity, an SSB burst set is constructed. The SSB burst set may be constructed by a 5-ms time window (i.e., half-frame) and the SSB may be transmitted up to L times within an SS burst set. L which is the maximum number of transmissions of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time position of an SSB candidate in the SS burst set may be defined as follows according to an SCS. The time positions of the SSB candidates are indexed as 0 to L - 1 in a time order within the SSB burst set (i.e., half-frame).

- Case A - 15 kHz SCS: The index of the start symbol of the candidate SSB is given as {2, 8} + 14 * n. When the carrier frequency is 3 GHz or less, n = 0, 1. When the carrier frequency is 3 to 6 GHz, n = 0, 1, 2, 3.
- Case B - 30 kHz SCS: The index of the start symbol of the candidate SSB is given as {4, 8, 16, 20} + 28 * n. When the carrier frequency is 3 GHz or less, n = 0. When the carrier frequency is 3 to 6 GHz, n = 0, 1.
- Case C - 30 kHz SCS: The index of the start symbol of the candidate SSB is given as {2, 8} + 14 * n. When the carrier frequency is 3 GHz or less, n = 0, 1. When the carrier frequency is 3 to 6 GHz, n = 0, 1, 2, 3.
- Case D - 120 kHz SCS: The index of the start symbol of the candidate SSB is given as {4, 8, 16, 20} + 28 * n. When the carrier frequency is more than 6 GHz, n = 0, 1, 2, 3, 5, 6, 7, 8, 10, 11, 12, 13, 15, 16, 17, 18.
- Case E - 240 kHz SCS: The index of the start symbol of the candidate SSB is given as {8, 12, 16, 20, 32, 36, 40, 44} + 56 * n. When the carrier frequency is more than 6 GHz, n = 0, 1, 2, 3, 5, 6, 7, 8.

An RACH slot is described below.
An RACH slot includes one or multiple RACH Occasion(s).
Slot duration is 1 ms for {1.25 kHz, 5 kHz} subcarrier spacing, and has scalable duration (i.e., 1 ms, 0.5 ms, 0.25 ms, 0.125 ms) for {15 kHz, 30 kHz, 60 kHz, 120 kHz} subcarrier spacing.
A start OFDM symbol index in an RACH slot has {0,2,x} values for short preamble formats.
FIG. 4 illustrates RACH occasions for each preamble format.
Referring to FIG. 4, an RACH slot may include one or more RACH occasions (ROs) for each preamble format (e.g., A1, A2, ..., C2). (a) of FIG. 4 illustrates a case in which a starting OFDM symbol is '0', and (b) of FIG. 4 illustrates a case in which a starting OFDM symbol is '2'.

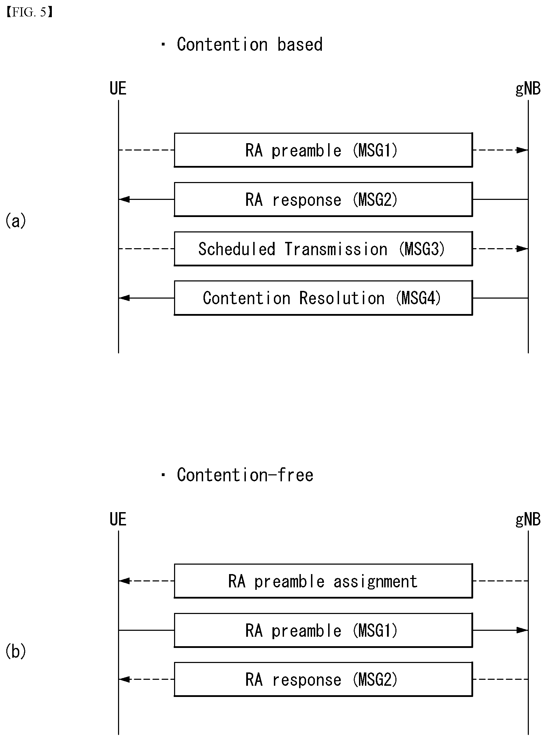

FIG. 5 illustrates a random access procedure.
(a) of FIG. 5 illustrates a contention based RACH procedure, and (b) of FIG. 5 illustrates a contention free RACH procedure.
MSG1 transmission is described below.
Subcarrier spacing for MSG1 is configured in an RACH configuration, and is provided in a handover command with respect to a contention-free RA procedure for handover.
Preamble indices for contention-based random access (CBRA) and contention-free random access (CFRA) are consecutively mapped to one SSB in one RACH transmission occasion.

- CBRA: Association between an SS block (SSB) within an SS burst set and a subset of RACH resources and/or preamble indices is configured by a parameter set in an RMSI.
- CFRA: A UE may be configured transmit multi-MSG1s through a dedicated multi-RACH transmission occasion in the time domain before the end of a monitored RAR window.

Furthermore, association between a CFRA preamble and an SSB is reconfigured through UE-specific RRC.
The random access procedure may be a Type-1 random access procedure (4-step RA) or a Type-2 random access procedure (2-step RA).
The Type-1 random access procedure may include transmission of random access preamble in a physical random access channel (PRACH) (Msg1), reception of a random access response (RAR) (Msg2), transmission of PUSCH scheduled by UL grant of the RAR (Msg3), and PDSCH for contention resolution (Msg4). If the random access procedure is contention free random access (CFRA), the Msg3 transmission and the Msg4 reception are omitted.
The Type-2 random access procedure may include transmission of random access preamble and PUSCH (MsgA) and RAR reception (MsgB).
The following Table 1 shows configurations/operations related to the random access preamble.

[Table 1]

8.1 Random access preamble

Physical random access procedure is triggered upon request of a PRACH transmission by higher layers or by a PDCCH order. A configuration by higher layers for a PRACH transmission includes the following:

- A configuration for PRACH transmission [4, TS 38.211].

- A preamble index, a preamble SCS, $P_{PRACH,target}$, a corresponding RA-RNTI, and a PRACH resource.

A PRACH is transmitted using the selected PRACH format with transmission power $P_{PRACH,b,f,c}(i)$, as described in clause 7.4, on the indicated PRACH resource.

For Type-1 random access procedure, a UE is provided a number $N$ of SS/PBCH block indexes associated with one PRACH occasion and a number $R$ of contention based preambles per SS/PBCH block index per valid PRACH occasion by *ssb-perRACH-OccasionAndCB-PreamblesPerSSB.*

For Type-2 random access procedure with common configuration of PRACH occasions with Type-1 random access procedure, a UE is provided a number $N$ of SS/PBCH block indexes associated with one PRACH occasion by *ssb-perRACH-OccasionAndCB-PreamblesPerSSB* and a number $Q$ of contention based preambles per SS/PBCH block

index per valid PRACH occasion by *msgA-CB-PreamblesPerSSB-PerSharedRO.* The PRACH transmission can be on a subset of PRACH occasions associated with a same SS/PBCH block index within an SSB-RO mapping cycle for a UE provided with a PRACH mask index by *msgA-SSB-SharedRO-MaskIndex* according to [11, TS 38.321].

For Type-2 random access procedure with separate configuration of PRACH occasions with Type-1 random access procedure, a UE is provided a number $N$ of SS/PBCH block indexes associated with one PRACH occasion and a number $R$ of contention based preambles per SS/PBCH block index per valid PRACH occasion by *msgA-SSB-PerRACH-OccasionAndCB-PreamblesPerSSB* when provided; otherwise, by *ssb-perRACH-OccasionAndCB-PreamblesPerSSB.*

For a random access procedure associated with a feature combination indicated by *FeatureCombinationPreambles,* a UE is provided a number $N$ of SS/PBCH block indexes associated with one PRACH occasion by *ssb-perRACH-OccasionAndCB-PreamblesPerSSB* or *msgA-SSB-PerRACH-OccasionAndCB-PreamblesPerSSB* when provided and a number $S$ of contention based preambles per SS/PBCH block index per valid PRACH occasion by *startPreambleForThisPartition and numberOfPreamblesPerSSB-ForThisPartition.* The PRACH transmission can be on a subset of PRACH occasions associated with a same SS/PBCH block index within an SSB-RO mapping cycle for a UE provided with a PRACH mask index

within an SSB-RO mapping cycle for a UE provided with a PRACH mask index by *ssb-SharedRO-MaskIndex* according to [11, TS 38.321].

For Type-1 random access procedure, or for Type-2 random access procedure with separate configuration of PRACH occasions from Type 1 random access procedure, if $N < 1$, one SS/PBCH block index is mapped to *1/N* consecutive valid PRACH occasions and $R$ contention based preambles with consecutive indexes associated with the SS/PBCH block index per valid PRACH occasion start from preamble index 0. If $N \geq 1$, $R$ contention based preambles with consecutive indexes associated with SS/PBCH block index $n$, $0 \leq n \leq N - 1$, per valid PRACH occasion start from preamble index $n \cdot N_{preamble}^{total} / N$ where $N_{preamble}^{total}$ is provided by *totalNumberOfRA-Preambles* for Type-1 random access procedure, or by *msgA-TotalNumberOfRA-Preambles* for Type-2 random access procedure with separate configuration of PRACH occasions from a Type 1 random access procedure, and is an integer multiple of $N$.

For Type-2 random access procedure with common configuration of PRACH occasions with Type-1 random access procedure, if $N < 1$, one SS/PBCH block index is mapped to *1/N* consecutive valid PRACH occasions and $Q$ contention based preambles with consecutive indexes associated with the SS/PBCH block index per valid PRACH occasion start from preamble index $R$. If $N \geq 1$, $Q$ contention based preambles with consecutive indexes associated with SS/PBCH block index n, $0 \leq n \leq N - 1$, per valid PRACH occasion start from preamble index $n \cdot N_{preamble}^{total} / N +$ R, where $N_{preamble}^{total}$ is provided by *totalNumberOfRA-Preambles* for Type-1 random access procedure.

For link recovery, a UE is provided N SS/PBCH block indexes associated with one PRACH occasion by *ssb-perRACH-Occasion* in *BeamFailureRecoveryConfig.* For a dedicated RACH configuration provided by *RACH-ConfigDedicated,* if *cfra* is provided, a UE is provided N SS/PBCH block indexes associated with one PRACH occasion by *ssb-perRACH-Occasion* in *occasions.* If $N < 1$, one SS/PBCH block index is mapped to *1/N* consecutive valid PRACH occasions. If $N \geq 1,$ all consecutive $N$ SS/PBCH block indexes are associated with one PRACH occasion.

(continued)

SS/PBCH block indexes provided by *ssb-PositionsInBurst* in *SIB1* or in *ServingCellConfigCommon* are mapped to valid PRACH occasions in the following order where the parameters are described in [4, TS 38.211].

- First, in increasing order of preamble indexes within a single PRACH occasion

- Second, in increasing order of frequency resource indexes for frequency multiplexed PRACH occasions

- Third, in increasing order of time resource indexes for time multiplexed

PRACH occasions within a PRACH slot

- Fourth, in increasing order of indexes for PRACH slots

An association period, starting from frame 0, for mapping SS/PBCH block indexes to PRACH occasions is the smallest value in the set determined by the PRACH configuration period according Table 8.1-1 such that $N_{\text{Tx}}^{\text{SSB}}$ SS/PBCH block indexes are mapped at least once to the PRACH occasions within the association period, where a UE obtains $N_{\text{Tx}}^{\text{SSB}}$ from the value of *ssb-PositionsInBurst* in *SIB1* or in *ServingCellConfigCommon*. If after an integer number of SS/PBCH block indexes to PRACH occasions mapping cycles within the association period there is a set of PRACH occasions or PRACH preambles that are not mapped to $N_{\text{Tx}}^{\text{SSB}}$ SS/PBCH block indexes, no SS/PBCH block indexes are mapped to the set of PRACH occasions or PRACH preambles. An association pattern period includes one or more association periods and is determined so that a pattern between PRACH occasions and SS/PBCH block indexes repeats at most every 160 msec. PRACH occasions not associated with SS/PBCH block indexes after an integer number of association periods, if any, are not used for PRACH transmissions.

For a PRACH transmission by a UE triggered by a PDCCH order, the PRACH mask index field [5, TS 38.212], if the value of the random access preamble index field is not zero, indicates the PRACH occasion for the PRACH transmission where the PRACH occasions are associated with the SS/PBCH block index indicated by the SS/PBCH block index field of the PDCCH order. If the UE is provided $K_{\text{cell,offset}}$ by *cellSpecificKoffset,* the PRACH occasion is after slot n + $2^{\square}$ · $K_{\text{cell,offset}}$ where n is the slot of the UL BWP for the PRACH transmission that overlaps with the end of the PDCCH order reception assuming $T_{\text{TA}}$ = 0, and $\mu$ is the SCS configuration for the PRACH transmission. If the PDCCH reception for the PDCCH order includes two PDCCH candidates from two linked search space sets based on *searchSpaceLinkingId,* as described in clause 10.1, the last symbol of the PDCCH reception is the last symbol of the PDCCH candidate that ends later. The PDCCH reception includes the two PDCCH candidates also when the UE is not required to monitor one of the two PDCCH candidates as described in clauses 10 (except clause 10.4), 11.1, 11.1.1 and 17.2.

For a PRACH transmission triggered by higher layers, if *ssb-ResourceList* is provided, the PRACH mask index is indicated by *ra-ssb-OccasionMaskIndex* which indicates the PRACH occasions for the PRACH transmission where the PRACH occasions are associated with the selected SS/PBCH block index.

The PRACH occasions are mapped consecutively per corresponding SS/PBCH block index. The indexing of the PRACH occasion indicated by the mask index value is reset per mapping cycle of consecutive PRACH occasions per SS/PBCH block index. The UE selects for a PRACH transmission the PRACH occasion

The configurations/definitions/operations according to Table 1 above may be referred to in order to clarify definitions/operations of embodiments to be described below. As an example, FDMed ROs to be described below may refer to frequency multiplexed PRACH occasions mentioned in Table 1. As an example, in an embodiment to be described below, a beam index may mean the SS/PBCH block index mentioned in Table 1. As an example, in an embodiment to be described below, ROs may refer to the valid PRACH occasions mentioned in Table 1. As an example, in an embodiment to be described below, multiple ROs having a same beam index may mean 1/N (where, N < 1) consecutive valid PRACH occasions to which one SS/PBCH index is mapped.

Tables 2 to 4 below illustrate PRACH configuration tables to which the embodiments to be described below may be applied.

[Table 2]

Table 6.3.3.2-2: Random access configurations for FR1 and paired spectrum/supplementary uplink.

| PRACH Configur | Preamble format | $n_{SFN} \bmod x = y$ | Subframe number | Starting symbol | Number of | $N^{RA,slot}$, number of |
|---|---|---|---|---|---|---|

| ation index | | x | y | | | PRACH slots within a subframe | time-domain PRACH ccasions within a PRACH slot | $N_{dur}^{RA}$, PRACH duration |
|---|---|---|---|---|---|---|---|---|
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |
| 7 | 0 | 8 | 1 | 9 | 0 | - | - | 0 |
| 8 | 0 | 4 | 1 | 1 | 0 | - | - | 0 |
| 9 | 0 | 4 | 1 | 4 | 0 | - | - | 0 |
| 10 | 0 | 4 | 1 | 7 | 0 | - | - | 0 |
| 11 | 0 | 4 | 1 | 9 | 0 | - | - | 0 |
| 12 | 0 | 2 | 1 | 1 | 0 | - | - | 0 |
| 13 | 0 | 2 | 1 | 4 | 0 | - | - | 0 |
| 14 | 0 | 2 | 1 | 7 | 0 | - | - | 0 |
| 15 | 0 | 2 | 1 | 9 | 0 | - | - | 0 |
| 16 | 0 | 1 | 0 | 1 | 0 | - | - | 0 |
| 17 | 0 | 1 | 0 | 4 | 0 | - | - | 0 |
| 18 | 0 | 1 | 0 | 7 | 0 | - | - | 0 |
| 19 | 0 | 1 | 0 | 1,6 | 0 | - | - | 0 |
| 20 | 0 | 1 | 0 | 2,7 | 0 | - | - | 0 |
| 21 | 0 | 1 | 0 | 3,8 | 0 | - | - | 0 |
| 22 | 0 | 1 | 0 | 1,4,7 | 0 | - | - | 0 |
| 23 | 0 | 1 | 0 | 2,5,8 | 0 | - | - | 0 |
| 24 | 0 | 1 | 0 | 3, 6, 9 | 0 | - | - | 0 |
| 25 | 0 | 1 | 0 | 0,2,4,6,8 | 0 | - | - | 0 |
| 26 | 0 | 1 | 0 | 1,3,5,7,9 | 0 | - | - | 0 |
| 27 | 0 | 1 | 0 | 0,1,2,3,4,5,6,7,8,9 | 0 | - | - | 0 |
| 28 | 1 | 16 | 1 | 1 | 0 | - | - | 0 |
| 29 | 1 | 16 | 1 | 4 | 0 | - | - | 0 |

| 30 | 1 | 16 | 1 | 7 | 0 | - | - | 0 |
|----|---|----|---|---|---|---|---|---|
| 31 | 1 | 16 | 1 | 9 | 0 | - | - | 0 |
| 32 | 1 | 8 | 1 | 1 | 0 | - | - | 0 |
| 33 | 1 | 8 | 1 | 4 | 0 | - | - | 0 |
| 34 | 1 | 8 | 1 | 7 | 0 | - | - | 0 |
| 35 | 1 | 8 | 1 | 9 | 0 | - | - | 0 |
| 36 | 1 | 4 | 1 | 1 | 0 | - | - | 0 |
| 37 | 1 | 4 | 1 | 4 | 0 | - | - | 0 |
| 38 | 1 | 4 | 1 | 7 | 0 | - | - | 0 |
| 39 | 1 | 4 | 1 | 9 | 0 | - | - | 0 |
| 40 | 1 | 2 | 1 | 1 | 0 | - | - | 0 |
| 41 | 1 | 2 | 1 | 4 | 0 | - | - | 0 |
| 42 | 1 | 2 | 1 | 7 | 0 | - | - | 0 |
| 43 | 1 | 2 | 1 | 9 | 0 | - | - | 0 |
| 44 | 1 | 1 | 0 | 1 | 0 | - | - | 0 |
| 45 | 1 | 1 | 0 | 4 | 0 | - | - | 0 |
| 46 | 1 | 1 | 0 | 7 | 0 | - | - | 0 |
| 47 | 1 | 1 | 0 | 1,6 | 0 | - | - | 0 |
| 48 | 1 | 1 | 0 | 2,7 | 0 | - | - | 0 |

| 49 | 1 | 1 | 0 | 3,8 | 0 | - | - | 0 |
|----|---|----|---|-----|---|---|---|---|
| 50 | 1 | 1 | 0 | 1,4,7 | 0 | - | - | 0 |
| 51 | 1 | 1 | 0 | 2,5,8 | 0 | - | - | 0 |
| 52 | 1 | 1 | 0 | 3,6,9 | 0 | - | - | 0 |
| 53 | 2 | 16 | 1 | 1 | 0 | - | - | 0 |
| 54 | 2 | 8 | 1 | 1 | 0 | - | - | 0 |
| 55 | 2 | 4 | 0 | 1 | 0 | - | - | 0 |
| 56 | 2 | 2 | 0 | 1 | 0 | - | - | 0 |
| 57 | 2 | 2 | 0 | 5 | 0 | - | - | 0 |
| 58 | 2 | 1 | 0 | 1 | 0 | - | - | 0 |
| 59 | 2 | 1 | 0 | 5 | 0 | - | - | 0 |
| 60 | 3 | 16 | 1 | 1 | 0 | - | - | 0 |
| 61 | 3 | 16 | 1 | 4 | 0 | - | - | 0 |
| 62 | 3 | 16 | 1 | 7 | 0 | - | - | 0 |
| 63 | 3 | 16 | 1 | 9 | 0 | - | - | 0 |
| 64 | 3 | 8 | 1 | 1 | 0 | - | - | 0 |
| 65 | 3 | 8 | 1 | 4 | 0 | - | - | 0 |
| 66 | 3 | 8 | 1 | 7 | 0 | - | - | 0 |

| 67 | 3 | 4 | 1 | 1 | 0 | - | - | 0 |
|---|---|---|---|---|---|---|---|---|
| 68 | 3 | 4 | 1 | 4 | 0 | - | - | 0 |
| 69 | 3 | 4 | 1 | 7 | 0 | - | - | 0 |
| 70 | 3 | 4 | 1 | 9 | 0 | - | - | 0 |
| 71 | 3 | 2 | 1 | 1 | 0 | - | - | 0 |
| 72 | 3 | 2 | 1 | 4 | 0 | - | - | 0 |
| 73 | 3 | 2 | 1 | 7 | 0 | - | - | 0 |
| 74 | 3 | 2 | 1 | 9 | 0 | - | - | 0 |
| 75 | 3 | 1 | 0 | 1 | 0 | - | - | 0 |
| 76 | 3 | 1 | 0 | 4 | 0 | - | - | 0 |
| 77 | 3 | 1 | 0 | 7 | 0 | - | - | 0 |
| 78 | 3 | 1 | 0 | 1,6 | 0 | - | - | 0 |
| 79 | 3 | 1 | 0 | 2,7 | 0 | - | - | 0 |
| 80 | 3 | 1 | 0 | 3,8 | 0 | - | - | 0 |

| 81 | 3 | 1 | 0 | 1,4,7 | 0 | - | - | 0 |
|---|---|---|---|---|---|---|---|---|
| 82 | 3 | 1 | 0 | 2,5,8 | 0 | - | - | 0 |
| 83 | 3 | 1 | 0 | 3, 6, 9 | 0 | - | - | 0 |
| 84 | 3 | 1 | 0 | 0,2,4,6,8 | 0 | - | - | 0 |
| 85 | 3 | 1 | 0 | 1,3,5,7,9 | 0 | - | - | 0 |
| 86 | 3 | 1 | 0 | 0,1,2,3,4,5,6,7,8,9 | 0 | - | - | 0 |
| 87 | A1 | 16 | 0 | 4,9 | 0 | 1 | 6 | 2 |
| 88 | A1 | 16 | 1 | 4 | 0 | 2 | 6 | 2 |
| 89 | A1 | 8 | 0 | 4,9 | 0 | 1 | 6 | 2 |
| 90 | A1 | 8 | 1 | 4 | 0 | 2 | 6 | 2 |
| 91 | A1 | 4 | 0 | 4,9 | 0 | 1 | 6 | 2 |
| 92 | A1 | 4 | 1 | 4,9 | 0 | 1 | 6 | 2 |
| 93 | A1 | 4 | 0 | 4 | 0 | 2 | 6 | 2 |
| 94 | A1 | 2 | 0 | 4,9 | 0 | 1 | 6 | 2 |
| 95 | A1 | 2 | 0 | 1 | 0 | 2 | 6 | 2 |
| 96 | A1 | 2 | 0 | 4 | 0 | 2 | 6 | 2 |
| 97 | A1 | 2 | 0 | 7 | 0 | 2 | 6 | 2 |
| 98 | A1 | 1 | 0 | 4 | 0 | 1 | 6 | 2 |
| 99 | A1 | 1 | 0 | 1,6 | 0 | 1 | 6 | 2 |
| 100 | A1 | 1 | 0 | 4,9 | 0 | 1 | 6 | 2 |
| 101 | A1 | 1 | 0 | 1 | 0 | 2 | 6 | 2 |
| 102 | A1 | 1 | 0 | 7 | 0 | 2 | 6 | 2 |

| 103 | A1 | 1 | 0 | 2,7 | 0 | 2 | 6 | 2 |
| 104 | A1 | 1 | 0 | 1,4,7 | 0 | 2 | 6 | 2 |
| 105 | A1 | 1 | 0 | 0,2,4,6,8 | 0 | 2 | 6 | 2 |
| 106 | A1 | 1 | 0 | 0,1,2,3,4,5,6,7,8,9 | 0 | 2 | 6 | 2 |
| 107 | A1 | 1 | 0 | 1,3,5,7,9 | 0 | 2 | 6 | 2 |
| 108 | A1/B1 | 2 | 0 | 4,9 | 0 | 1 | 7 | 2 |
| 109 | A1/B1 | 2 | 0 | 4 | 0 | 2 | 7 | 2 |
| 110 | A1/B1 | 1 | 0 | 4 | 0 | 1 | 7 | 2 |
| 111 | A1/B1 | 1 | 0 | 1,6 | 0 | 1 | 7 | 2 |

| 112 | A1/B1 | 1 | 0 | 4,9 | 0 | 1 | 7 | 2 |
| 113 | A1/B1 | 1 | 0 | 1 | 0 | 2 | 7 | 2 |
| 114 | A1/B1 | 1 | 0 | 7 | 0 | 2 | 7 | 2 |
| 115 | A1/B1 | 1 | 0 | 1,4,7 | 0 | 2 | 7 | 2 |
| 116 | A1/B1 | 1 | 0 | 0,2,4,6,8 | 0 | 2 | 7 | 2 |
| 117 | A2 | 16 | 1 | 2,6,9 | 0 | 1 | 3 | 4 |
| 118 | A2 | 16 | 1 | 4 | 0 | 2 | 3 | 4 |
| 119 | A2 | 8 | 1 | 2,6,9 | 0 | 1 | 3 | 4 |
| 120 | A2 | 8 | 1 | 4 | 0 | 2 | 3 | 4 |
| 121 | A2 | 4 | 0 | 2,6,9 | 0 | 1 | 3 | 4 |
| 122 | A2 | 4 | 0 | 4 | 0 | 2 | 3 | 4 |
| 123 | A2 | 2 | 1 | 2,6,9 | 0 | 1 | 3 | 4 |
| 124 | A2 | 2 | 0 | 1 | 0 | 2 | 3 | 4 |
| 125 | A2 | 2 | 0 | 4 | 0 | 2 | 3 | 4 |
| 126 | A2 | 2 | 0 | 7 | 0 | 2 | 3 | 4 |
| 127 | A2 | 1 | 0 | 4 | 0 | 1 | 3 | 4 |
| 128 | A2 | 1 | 0 | 1,6 | 0 | 1 | 3 | 4 |
| 129 | A2 | 1 | 0 | 4,9 | 0 | 1 | 3 | 4 |
| 130 | A2 | 1 | 0 | 1 | 0 | 2 | 3 | 4 |
| 131 | A2 | 1 | 0 | 7 | 0 | 2 | 3 | 4 |
| 132 | A2 | 1 | 0 | 2,7 | 0 | 2 | 3 | 4 |
| 133 | A2 | 1 | 0 | 1,4,7 | 0 | 2 | 3 | 4 |
| 134 | A2 | 1 | 0 | 0,2,4,6,8 | 0 | 2 | 3 | 4 |
| 135 | A2 | 1 | 0 | 0,1,2,3,4,5,6,7,8,9 | 0 | 2 | 3 | 4 |
| 136 | A2 | 1 | 0 | 1,3,5,7,9 | 0 | 2 | 3 | 4 |
| 137 | A2/B2 | 2 | 1 | 2,6,9 | 0 | 1 | 3 | 4 |

| 138 | A2/B2 | 2 | 0 | 4 | 0 | 2 | 3 | 4 |
|---|---|---|---|---|---|---|---|---|
| 139 | A2/B2 | 1 | 0 | 4 | 0 | 1 | 3 | 4 |
| 140 | A2/B2 | 1 | 0 | 1,6 | 0 | 1 | 3 | 4 |
| 141 | A2/B2 | 1 | 0 | 4,9 | 0 | 1 | 3 | 4 |
| 142 | A2/B2 | 1 | 0 | 1 | 0 | 2 | 3 | 4 |
| 143 | A2/B2 | 1 | 0 | 7 | 0 | 2 | 3 | 4 |

| 144 | A2/B2 | 1 | 0 | 1,4,7 | 0 | 2 | 3 | 4 |
|---|---|---|---|---|---|---|---|---|
| 145 | A2/B2 | 1 | 0 | 0,2,4,6,8 | 0 | 2 | 3 | 4 |
| 146 | A2/B2 | 1 | 0 | 0,1,2,3,4,<br>5,6,7,8,9 | 0 | 2 | 3 | 4 |
| 147 | A3 | 16 | 1 | 4,9 | 0 | 1 | 2 | 6 |
| 148 | A3 | 16 | 1 | 4 | 0 | 2 | 2 | 6 |
| 149 | A3 | 8 | 1 | 4,9 | 0 | 1 | 2 | 6 |
| 150 | A3 | 8 | 1 | 4 | 0 | 2 | 2 | 6 |
| 151 | A3 | 4 | 0 | 4,9 | 0 | 1 | 2 | 6 |
| 152 | A3 | 4 | 0 | 4 | 0 | 2 | 2 | 6 |
| 153 | A3 | 2 | 1 | 2,6,9 | 0 | 2 | 2 | 6 |
| 154 | A3 | 2 | 0 | 1 | 0 | 2 | 2 | 6 |
| 155 | A3 | 2 | 0 | 4 | 0 | 2 | 2 | 6 |
| 156 | A3 | 2 | 0 | 7 | 0 | 2 | 2 | 6 |
| 157 | A3 | 1 | 0 | 4 | 0 | 1 | 2 | 6 |
| 158 | A3 | 1 | 0 | 1,6 | 0 | 1 | 2 | 6 |
| 159 | A3 | 1 | 0 | 4,9 | 0 | 1 | 2 | 6 |
| 160 | A3 | 1 | 0 | 1 | 0 | 2 | 2 | 6 |
| 161 | A3 | 1 | 0 | 7 | 0 | 2 | 2 | 6 |
| 162 | A3 | 1 | 0 | 2,7 | 0 | 2 | 2 | 6 |
| 163 | A3 | 1 | 0 | 1,4,7 | 0 | 2 | 2 | 6 |
| 164 | A3 | 1 | 0 | 0,2,4,6,8 | 0 | 2 | 2 | 6 |
| 165 | A3 | 1 | 0 | 0,1,2,3,4,<br>5,6,7,8,9 | 0 | 2 | 2 | 6 |
| 166 | A3 | 1 | 0 | 1,3,5,7,9 | 0 | 2 | 2 | 6 |
| 167 | A3/B3 | 2 | 1 | 2,6,9 | 0 | 2 | 2 | 6 |
| 168 | A3/B3 | 2 | 0 | 4 | 0 | 2 | 2 | 6 |
| 169 | A3/B3 | 1 | 0 | 4 | 0 | 1 | 2 | 6 |
| 170 | A3/B3 | 1 | 0 | 1,6 | 0 | 1 | 2 | 6 |
| 171 | A3/B3 | 1 | 0 | 4,9 | 0 | 1 | 2 | 6 |
| 172 | A3/B3 | 1 | 0 | 1 | 0 | 2 | 2 | 6 |

| 173 | A3/B3 | 1 | 0 | 7 | 0 | 2 | 2 | 6 |
|---|---|---|---|---|---|---|---|---|
| 174 | A3/B3 | 1 | 0 | 1,4,7 | 0 | 2 | 2 | 6 |

| 175 | A3/B3 | 1 | 0 | 0,2,4,6,8 | 0 | 2 | 2 | 6 |
|---|---|---|---|---|---|---|---|---|
| 176 | A3/B3 | 1 | 0 | 0,1,2,3,4,<br>5,6,7,8,9 | 0 | 2 | 2 | 6 |
| 177 | B1 | 16 | 0 | 4,9 | 0 | 1 | 7 | 2 |
| 178 | B1 | 16 | 1 | 4 | 0 | 2 | 7 | 2 |
| 179 | B1 | 8 | 0 | 4,9 | 0 | 1 | 7 | 2 |
| 180 | B1 | 8 | 1 | 4 | 0 | 2 | 7 | 2 |
| 181 | B1 | 4 | 0 | 4,9 | 0 | 1 | 7 | 2 |
| 182 | B1 | 4 | 1 | 4,9 | 0 | 1 | 7 | 2 |
| 183 | B1 | 4 | 0 | 4 | 0 | 2 | 7 | 2 |
| 184 | B1 | 2 | 0 | 4,9 | 0 | 1 | 7 | 2 |
| 185 | B1 | 2 | 0 | 1 | 0 | 2 | 7 | 2 |
| 186 | B1 | 2 | 0 | 4 | 0 | 2 | 7 | 2 |
| 187 | B1 | 2 | 0 | 7 | 0 | 2 | 7 | 2 |
| 188 | B1 | 1 | 0 | 4 | 0 | 1 | 7 | 2 |
| 189 | B1 | 1 | 0 | 1,6 | 0 | 1 | 7 | 2 |
| 190 | B1 | 1 | 0 | 4,9 | 0 | 1 | 7 | 2 |
| 191 | B1 | 1 | 0 | 1 | 0 | 2 | 7 | 2 |
| 192 | B1 | 1 | 0 | 7 | 0 | 2 | 7 | 2 |
| 193 | B1 | 1 | 0 | 2,7 | 0 | 2 | 7 | 2 |
| 194 | B1 | 1 | 0 | 1,4,7 | 0 | 2 | 7 | 2 |
| 195 | B1 | 1 | 0 | 0,2,4,6,8 | 0 | 2 | 7 | 2 |
| 196 | B1 | 1 | 0 | 0,1,2,3,4,<br>5,6,7,8,9 | 0 | 2 | 7 | 2 |
| 197 | B1 | 1 | 0 | 1,3,5,7,9 | 0 | 2 | 7 | 2 |
| 198 | B4 | 16 | 0 | 4,9 | 0 | 2 | 1 | 12 |
| 199 | B4 | 16 | 1 | 4 | 0 | 2 | 1 | 12 |
| 200 | B4 | 8 | 0 | 4,9 | 0 | 2 | 1 | 12 |
| 201 | B4 | 8 | 1 | 4 | 0 | 2 | 1 | 12 |
| 202 | B4 | 4 | 0 | 4,9 | 0 | 2 | 1 | 12 |
| 203 | B4 | 4 | 0 | 4 | 0 | 2 | 1 | 12 |
| 204 | B4 | 4 | 1 | 4,9 | 0 | 2 | 1 | 12 |
| 205 | B4 | 2 | 0 | 4,9 | 0 | 2 | 1 | 12 |

| 206 | B4 | 2 | 0 | 1 | 0 | 2 | 1 | 12 |
|---|---|---|---|---|---|---|---|---|

| 207 | B4 | 2 | 0 | 4 | 0 | 2 | 1 | 12 |
|---|---|---|---|---|---|---|---|---|
| 208 | B4 | 2 | 0 | 7 | 0 | 2 | 1 | 12 |
| 209 | B4 | 1 | 0 | 1 | 0 | 2 | 1 | 12 |
| 210 | B4 | 1 | 0 | 4 | 0 | 2 | 1 | 12 |
| 211 | B4 | 1 | 0 | 7 | 0 | 2 | 1 | 12 |
| 212 | B4 | 1 | 0 | 1,6 | 0 | 2 | 1 | 12 |
| 213 | B4 | 1 | 0 | 2,7 | 0 | 2 | 1 | 12 |
| 214 | B4 | 1 | 0 | 4,9 | 0 | 2 | 1 | 12 |
| 215 | B4 | 1 | 0 | 1,4,7 | 0 | 2 | 1 | 12 |
| 216 | B4 | 1 | 0 | 0,2,4,6,8 | 0 | 2 | 1 | 12 |
| 217 | B4 | 1 | 0 | 0,1,2,3,4, 5,6,7,8,9 | 0 | 2 | 1 | 12 |
| 218 | B4 | 1 | 0 | 1,3,5,7,9 | 0 | 2 | 1 | 12 |
| 219 | C0 | 8 | 1 | 4 | 0 | 2 | 7 | 2 |
| 220 | C0 | 4 | 1 | 4,9 | 0 | 1 | 7 | 2 |
| 221 | C0 | 4 | 0 | 4 | 0 | 2 | 7 | 2 |
| 222 | C0 | 2 | 0 | 4,9 | 0 | 1 | 7 | 2 |
| 223 | C0 | 2 | 0 | 1 | 0 | 2 | 7 | 2 |
| 224 | C0 | 2 | 0 | 4 | 0 | 2 | 7 | 2 |
| 225 | C0 | 2 | 0 | 7 | 0 | 2 | 7 | 2 |
| 226 | C0 | 1 | 0 | 4 | 0 | 1 | 7 | 2 |
| 227 | C0 | 1 | 0 | 1,6 | 0 | 1 | 7 | 2 |
| 228 | C0 | 1 | 0 | 4,9 | 0 | 1 | 7 | 2 |
| 229 | C0 | 1 | 0 | 1 | 0 | 2 | 7 | 2 |
| 230 | C0 | 1 | 0 | 7 | 0 | 2 | 7 | 2 |
| 231 | C0 | 1 | 0 | 2,7 | 0 | 2 | 7 | 2 |
| 232 | C0 | 1 | 0 | 1,4,7 | 0 | 2 | 7 | 2 |
| 233 | C0 | 1 | 0 | 0,2,4,6,8 | 0 | 2 | 7 | 2 |
| 234 | C0 | 1 | 0 | 0,1,2,3,4, 5,6,7,8,9 | 0 | 2 | 7 | 2 |
| 235 | C0 | 1 | 0 | 1,3,5,7,9 | 0 | 2 | 7 | 2 |
| 236 | C2 | 16 | 1 | 4,9 | 0 | 1 | 2 | 6 |

| 237 | C2 | 16 | 1 | 4 | 0 | 2 | 2 | 6 |
|---|---|---|---|---|---|---|---|---|
| 238 | C2 | 8 | 1 | 4,9 | 0 | 1 | 2 | 6 |
| 239 | C2 | 8 | 1 | 4 | 0 | 2 | 2 | 6 |
| 240 | C2 | 4 | 0 | 4,9 | 0 | 1 | 2 | 6 |
| 241 | C2 | 4 | 0 | 4 | 0 | 2 | 2 | 6 |

| 242 | C2 | 2 | 1 | 2,6,9 | 0 | 2 | 2 | 6 |
|---|---|---|---|---|---|---|---|---|
| 243 | C2 | 2 | 0 | 1 | 0 | 2 | 2 | 6 |
| 244 | C2 | 2 | 0 | 4 | 0 | 2 | 2 | 6 |
| 245 | C2 | 2 | 0 | 7 | 0 | 2 | 2 | 6 |
| 246 | C2 | 1 | 0 | 4 | 0 | 1 | 2 | 6 |
| 247 | C2 | 1 | 0 | 1,6 | 0 | 1 | 2 | 6 |
| 248 | C2 | 1 | 0 | 4,9 | 0 | 1 | 2 | 6 |
| 249 | C2 | 1 | 0 | 1 | 0 | 2 | 2 | 6 |
| 250 | C2 | 1 | 0 | 7 | 0 | 2 | 2 | 6 |
| 251 | C2 | 1 | 0 | 2,7 | 0 | 2 | 2 | 6 |
| 252 | C2 | 1 | 0 | 1,4,7 | 0 | 2 | 2 | 6 |
| 253 | C2 | 1 | 0 | 0,2,4,6,8 | 0 | 2 | 2 | 6 |
| 254 | C2 | 1 | 0 | 0,1,2,3,4, 5,6,7,8,9 | 0 | 2 | 2 | 6 |
| 255 | C2 | 1 | 0 | 1,3,5, 7,9 | 0 | 2 | 2 | 6 |

[Table 3]

Table 6.3.3.2-3: Random access configurations for FR1 and unpaired spectrum.

| PRACH Configuration index | Preamble format | $n_{SFN} \bmod x = y$ | | Subframe number | Starting symbol | Number of PRACH slots within a subframe | $N^{RA,slot}$, number of time-domain PRACH ccasions within a PRACH slot | $N^{RA}_{dur}$, PRACH duration |
|---|---|---|---|---|---|---|---|---|
| | | x | y | | | | | |
| 0 | 0 | 16 | 1 | 9 | 0 | - | - | 0 |
| 1 | 0 | 8 | 1 | 9 | 0 | - | - | 0 |
| 2 | 0 | 4 | 1 | 9 | 0 | - | - | 0 |
| 3 | 0 | 2 | 0 | 9 | 0 | - | - | 0 |
| 4 | 0 | 2 | 1 | 9 | 0 | - | - | 0 |
| 5 | 0 | 2 | 0 | 4 | 0 | - | - | 0 |
| 6 | 0 | 2 | 1 | 4 | 0 | - | - | 0 |
| 7 | 0 | 1 | 0 | 9 | 0 | - | - | 0 |
| 8 | 0 | 1 | 0 | 8 | 0 | - | - | 0 |
| 9 | 0 | 1 | 0 | 7 | 0 | - | - | 0 |
| 10 | 0 | 1 | 0 | 6 | 0 | - | - | 0 |
| 11 | 0 | 1 | 0 | 5 | 0 | - | - | 0 |
| 12 | 0 | 1 | 0 | 4 | 0 | - | - | 0 |

| 13 | 0 | 1 | 0 | 3 | 0 | - | - | 0 |
|---|---|---|---|---|---|---|---|---|
| 14 | 0 | 1 | 0 | 2 | 0 | - | - | 0 |
| 15 | 0 | 1 | 0 | 1,6 | 0 | | | 0 |
| 16 | 0 | 1 | 0 | 1,6 | 7 | - | - | 0 |
| 17 | 0 | 1 | 0 | 4,9 | 0 | - | - | 0 |

| 18 | 0 | 1 | 0 | 3,8 | 0 | - | - | 0 |
|---|---|---|---|---|---|---|---|---|
| 19 | 0 | 1 | 0 | 2,7 | 0 | - | - | 0 |
| 20 | 0 | 1 | 0 | 8,9 | 0 | - | - | 0 |
| 21 | 0 | 1 | 0 | 4,8,9 | 0 | - | - | 0 |
| 22 | 0 | 1 | 0 | 3,4,9 | 0 | - | - | 0 |
| 23 | 0 | 1 | 0 | 7,8,9 | 0 | - | - | 0 |
| 24 | 0 | 1 | 0 | 3,4,8,9 | 0 | - | - | 0 |
| 25 | 0 | 1 | 0 | 6,7,8,9 | 0 | - | - | 0 |
| 26 | 0 | 1 | 0 | 1,4,6,9 | 0 | - | - | 0 |
| 27 | 0 | 1 | 0 | 1,3,5,7,9 | 0 | - | - | 0 |
| 28 | 1 | 16 | 1 | 7 | 0 | - | - | 0 |
| 29 | 1 | 8 | 1 | 7 | 0 | - | - | 0 |
| 30 | 1 | 4 | 1 | 7 | 0 | - | - | 0 |
| 31 | 1 | 2 | 0 | 7 | 0 | - | - | 0 |
| 32 | 1 | 2 | 1 | 7 | 0 | - | - | 0 |
| 33 | 1 | 1 | 0 | 7 | 0 | - | - | 0 |
| 34 | 2 | 16 | 1 | 6 | 0 | - | - | 0 |
| 35 | 2 | 8 | 1 | 6 | 0 | - | - | 0 |
| 36 | 2 | 4 | 1 | 6 | 0 | - | - | 0 |
| 37 | 2 | 2 | 0 | 6 | 7 | - | - | 0 |
| 38 | 2 | 2 | 1 | 6 | 7 | - | - | 0 |
| 39 | 2 | 1 | 0 | 6 | 7 | - | - | 0 |
| 40 | 3 | 16 | 1 | 9 | 0 | - | - | 0 |
| 41 | 3 | 8 | 1 | 9 | 0 | - | - | 0 |
| 42 | 3 | 4 | 1 | 9 | 0 | - | - | 0 |
| 43 | 3 | 2 | 0 | 9 | 0 | - | - | 0 |
| 44 | 3 | 2 | 1 | 9 | 0 | - | - | 0 |
| 45 | 3 | 2 | 0 | 4 | 0 | - | - | 0 |
| 46 | 3 | 2 | 1 | 4 | 0 | - | - | 0 |
| 47 | 3 | 1 | 0 | 9 | 0 | - | - | 0 |
| 48 | 3 | 1 | 0 | 8 | 0 | - | - | 0 |

| 49 | 3 | 1 | 0 | 7 | 0 | - | - | 0 |
|---|---|---|---|---|---|---|---|---|

| 50 | 3 | 1 | 0 | 6 | 0 | - | - | 0 |
|---|---|---|---|---|---|---|---|---|
| 51 | 3 | 1 | 0 | 5 | 0 | - | - | 0 |
| 52 | 3 | 1 | 0 | 4 | 0 | - | - | 0 |
| 53 | 3 | 1 | 0 | 3 | 0 | - | - | 0 |
| 54 | 3 | 1 | 0 | 2 | 0 | - | - | 0 |
| 55 | 3 | 1 | 0 | 1,6 | 0 | - | - | 0 |
| 56 | 3 | 1 | 0 | 1,6 | 7 | - | - | 0 |
| 57 | 3 | 1 | 0 | 4,9 | 0 | - | - | 0 |
| 58 | 3 | 1 | 0 | 3,8 | 0 | - | - | 0 |
| 59 | 3 | 1 | 0 | 2,7 | 0 | - | - | 0 |
| 60 | 3 | 1 | 0 | 8,9 | 0 | - | - | 0 |
| 61 | 3 | 1 | 0 | 4,8,9 | 0 | - | - | 0 |
| 62 | 3 | 1 | 0 | 3,4,9 | 0 | - | - | 0 |
| 63 | 3 | 1 | 0 | 7,8,9 | 0 | - | - | 0 |
| 64 | 3 | 1 | 0 | 3,4,8,9 | 0 | - | - | 0 |
| 65 | 3 | 1 | 0 | 1,4,6,9 | 0 | - | - | 0 |
| 66 | 3 | 1 | 0 | 1,3,5,7,9 | 0 | - | - | 0 |
| 67 | A1 | 16 | 1 | 9 | 0 | 2 | 6 | 2 |
| 68 | A1 | 8 | 1 | 9 | 0 | 2 | 6 | 2 |
| 69 | A1 | 4 | 1 | 9 | 0 | 1 | 6 | 2 |
| 70 | A1 | 2 | 1 | 9 | 0 | 1 | 6 | 2 |
| 71 | A1 | 2 | 1 | 4,9 | 7 | 1 | 3 | 2 |
| 72 | A1 | 2 | 1 | 7,9 | 7 | 1 | 3 | 2 |
| 73 | A1 | 2 | 1 | 7,9 | 0 | 1 | 6 | 2 |
| 74 | A1 | 2 | 1 | 8,9 | 0 | 2 | 6 | 2 |
| 75 | A1 | 2 | 1 | 4,9 | 0 | 2 | 6 | 2 |
| 76 | A1 | 2 | 1 | 2,3,4,7,8,9 | 0 | 1 | 6 | 2 |
| 77 | A1 | 1 | 0 | 9 | 0 | 2 | 6 | 2 |
| 78 | A1 | 1 | 0 | 9 | 7 | 1 | 3 | 2 |
| 79 | A1 | 1 | 0 | 9 | 0 | 1 | 6 | 2 |
| 80 | A1 | 1 | 0 | 8,9 | 0 | 2 | 6 | 2 |
| 81 | A1 | 1 | 0 | 4,9 | 0 | 1 | 6 | 2 |

| 82 | A1 | 1 | 0 | 7,9 | 7 | 1 | 3 | 2 |
|---|---|---|---|---|---|---|---|---|
| 83 | A1 | 1 | 0 | 3,4,8,9 | 0 | 1 | 6 | 2 |
| 84 | A1 | 1 | 0 | 3,4,8,9 | 0 | 2 | 6 | 2 |

| 85 | A1 | 1 | 0 | 1,3,5,7,9 | 0 | 1 | 6 | 2 |
|---|---|---|---|---|---|---|---|---|
| 86 | A1 | 1 | 0 | 0,1,2,3,4, 5,6,7,8,9 | 7 | 1 | 3 | 2 |
| 87 | A2 | 16 | 1 | 9 | 0 | 2 | 3 | 4 |
| 88 | A2 | 8 | 1 | 9 | 0 | 2 | 3 | 4 |
| 89 | A2 | 4 | 1 | 9 | 0 | 1 | 3 | 4 |
| 90 | A2 | 2 | 1 | 7,9 | 0 | 1 | 3 | 4 |
| 91 | A2 | 2 | 1 | 8,9 | 0 | 2 | 3 | 4 |
| 92 | A2 | 2 | 1 | 7,9 | 9 | 1 | 1 | 4 |
| 93 | A2 | 2 | 1 | 4,9 | 9 | 1 | 1 | 4 |
| 94 | A2 | 2 | 1 | 4,9 | 0 | 2 | 3 | 4 |
| 95 | A2 | 2 | 1 | 2,3,4,7, 8,9 | 0 | 1 | 3 | 4 |
| 96 | A2 | 1 | 0 | 2 | 0 | 1 | 3 | 4 |
| 97 | A2 | 1 | 0 | 7 | 0 | 1 | 3 | 4 |
| 98 | A2 | 2 | 1 | 9 | 0 | 1 | 3 | 4 |
| 99 | A2 | 1 | 0 | 9 | 0 | 2 | 3 | 4 |
| 100 | A2 | 1 | 0 | 9 | 9 | 1 | 1 | 4 |
| 101 | A2 | 1 | 0 | 9 | 0 | 1 | 3 | 4 |
| 102 | A2 | 1 | 0 | 2,7 | 0 | 1 | 3 | 4 |
| 103 | A2 | 1 | 0 | 8,9 | 0 | 2 | 3 | 4 |
| 104 | A2 | 1 | 0 | 4,9 | 0 | 1 | 3 | 4 |
| 105 | A2 | 1 | 0 | 7,9 | 9 | 1 | 1 | 4 |
| 106 | A2 | 1 | 0 | 3,4,8,9 | 0 | 1 | 3 | 4 |
| 107 | A2 | 1 | 0 | 3,4,8,9 | 0 | 2 | 3 | 4 |
| 108 | A2 | 1 | 0 | 1,3,5,7,9 | 0 | 1 | 3 | 4 |
| 109 | A2 | 1 | 0 | 0,1,2,3, 4,5,6,7, 8,9 | 9 | 1 | 1 | 4 |
| 110 | A3 | 16 | 1 | 9 | 0 | 2 | 2 | 6 |

| 111 | A3 | 8 | 1 | 9 | 0 | 2 | 2 | 6 |
|---|---|---|---|---|---|---|---|---|
| 112 | A3 | 4 | 1 | 9 | 0 | 1 | 2 | 6 |
| 113 | A3 | 2 | 1 | 4,9 | 7 | 1 | 1 | 6 |
| 114 | A3 | 2 | 1 | 7,9 | 7 | 1 | 1 | 6 |
| 115 | A3 | 2 | 1 | 7,9 | 0 | 1 | 2 | 6 |
| 116 | A3 | 2 | 1 | 4,9 | 0 | 2 | 2 | 6 |
| 117 | A3 | 2 | 1 | 8,9 | 0 | 2 | 2 | 6 |

| 118 | A3 | 2 | 1 | 2,3,4,7,8,9 | 0 | 1 | 2 | 6 |
|---|---|---|---|---|---|---|---|---|
| 119 | A3 | 1 | 0 | 2 | 0 | 1 | 2 | 6 |
| 120 | A3 | 1 | 0 | 7 | 0 | 1 | 2 | 6 |
| 121 | A3 | 2 | 1 | 9 | 0 | 1 | 2 | 6 |
| 122 | A3 | 1 | 0 | 9 | 0 | 2 | 2 | 6 |
| 123 | A3 | 1 | 0 | 9 | 7 | 1 | 1 | 6 |
| 124 | A3 | 1 | 0 | 9 | 0 | 1 | 2 | 6 |
| 125 | A3 | 1 | 0 | 2,7 | 0 | 1 | 2 | 6 |
| 126 | A3 | 1 | 0 | 8,9 | 0 | 2 | 2 | 6 |
| 127 | A3 | 1 | 0 | 4,9 | 0 | 1 | 2 | 6 |
| 128 | A3 | 1 | 0 | 7,9 | 7 | 1 | 1 | 6 |
| 129 | A3 | 1 | 0 | 3,4,8,9 | 0 | 1 | 2 | 6 |
| 130 | A3 | 1 | 0 | 3,4,8,9 | 0 | 2 | 2 | 6 |
| 131 | A3 | 1 | 0 | 1,3,5,7,9 | 0 | 1 | 2 | 6 |
| 132 | A3 | 1 | 0 | 0,1,2,3,4,5,6,7,8,9 | 7 | 1 | 1 | 6 |
| 133 | B1 | 4 | 1 | 9 | 2 | 1 | 6 | 2 |
| 134 | B1 | 2 | 1 | 9 | 2 | 1 | 6 | 2 |
| 135 | B1 | 2 | 1 | 7,9 | 2 | 1 | 6 | 2 |
| 136 | B1 | 2 | 1 | 4,9 | 8 | 1 | 3 | 2 |
| 137 | B1 | 2 | 1 | 4,9 | 2 | 2 | 6 | 2 |
| 138 | B1 | 1 | 0 | 9 | 2 | 2 | 6 | 2 |
| 139 | B1 | 1 | 0 | 9 | 8 | 1 | 3 | 2 |
| 140 | B1 | 1 | 0 | 9 | 2 | 1 | 6 | 2 |

| 141 | B1 | 1 | 0 | 8,9 | 2 | 2 | 6 | 2 |
|---|---|---|---|---|---|---|---|---|
| 142 | B1 | 1 | 0 | 4,9 | 2 | 1 | 6 | 2 |
| 143 | B1 | 1 | 0 | 7,9 | 8 | 1 | 3 | 2 |
| 144 | B1 | 1 | 0 | 1,3,5,7,9 | 2 | 1 | 6 | 2 |
| 145 | B4 | 16 | 1 | 9 | 0 | 2 | 1 | 12 |
| 146 | B4 | 8 | 1 | 9 | 0 | 2 | 1 | 12 |
| 147 | B4 | 4 | 1 | 9 | 2 | 1 | 1 | 12 |
| 148 | B4 | 2 | 1 | 9 | 0 | 1 | 1 | 12 |
| 149 | B4 | 2 | 1 | 9 | 2 | 1 | 1 | 12 |
| 150 | B4 | 2 | 1 | 7,9 | 2 | 1 | 1 | 12 |
| 151 | B4 | 2 | 1 | 4,9 | 2 | 1 | 1 | 12 |

| 152 | B4 | 2 | 1 | 4,9 | 0 | 2 | 1 | 12 |
|---|---|---|---|---|---|---|---|---|
| 153 | B4 | 2 | 1 | 8,9 | 0 | 2 | 1 | 12 |
| 154 | B4 | 2 | 1 | 2,3,4,7,8,9 | 0 | 1 | 1 | 12 |
| 155 | B4 | 1 | 0 | 1 | 0 | 1 | 1 | 12 |
| 156 | B4 | 1 | 0 | 2 | 0 | 1 | 1 | 12 |
| 157 | B4 | 1 | 0 | 4 | 0 | 1 | 1 | 12 |
| 158 | B4 | 1 | 0 | 7 | 0 | 1 | 1 | 12 |
| 159 | B4 | 1 | 0 | 9 | 0 | 1 | 1 | 12 |
| 160 | B4 | 1 | 0 | 9 | 2 | 1 | 1 | 12 |
| 161 | B4 | 1 | 0 | 9 | 0 | 2 | 1 | 12 |
| 162 | B4 | 1 | 0 | 4,9 | 2 | 1 | 1 | 12 |
| 163 | B4 | 1 | 0 | 7,9 | 2 | 1 | 1 | 12 |
| 164 | B4 | 1 | 0 | 8,9 | 0 | 2 | 1 | 12 |
| 165 | B4 | 1 | 0 | 3,4,8,9 | 2 | 1 | 1 | 12 |
| 166 | B4 | 1 | 0 | 1,3,5,7,9 | 2 | 1 | 1 | 12 |
| 167 | B4 | 1 | 0 | 0,1,2,3,4,5,6,7,8,9 | 0 | 2 | 1 | 12 |
| 168 | B4 | 1 | 0 | 0,1,2,3,4,5,6,7,8,9 | 2 | 1 | 1 | 12 |
| 169 | C0 | 16 | 1 | 9 | 2 | 2 | 6 | 2 |
| 170 | C0 | 8 | 1 | 9 | 2 | 2 | 6 | 2 |
| 171 | C0 | 4 | 1 | 9 | 2 | 1 | 6 | 2 |

| 172 | C0 | 2 | 1 | 9 | 2 | 1 | 6 | 2 |
|---|---|---|---|---|---|---|---|---|
| 173 | C0 | 2 | 1 | 8,9 | 2 | 2 | 6 | 2 |
| 174 | C0 | 2 | 1 | 7,9 | 2 | 1 | 6 | 2 |
| 175 | C0 | 2 | 1 | 7,9 | 8 | 1 | 3 | 2 |
| 176 | C0 | 2 | 1 | 4,9 | 8 | 1 | 3 | 2 |
| 177 | C0 | 2 | 1 | 4,9 | 2 | 2 | 6 | 2 |
| 178 | C0 | 2 | 1 | 2,3,4,7,8,9 | 2 | 1 | 6 | 2 |
| 179 | C0 | 1 | 0 | 9 | 2 | 2 | 6 | 2 |
| 180 | C0 | 1 | 0 | 9 | 8 | 1 | 3 | 2 |
| 181 | C0 | 1 | 0 | 9 | 2 | 1 | 6 | 2 |
| 182 | C0 | 1 | 0 | 8,9 | 2 | 2 | 6 | 2 |
| 183 | C0 | 1 | 0 | 4,9 | 2 | 1 | 6 | 2 |
| 184 | C0 | 1 | 0 | 7,9 | 8 | 1 | 3 | 2 |
| 185 | C0 | 1 | 0 | 3,4,8,9 | 2 | 1 | 6 | 2 |
| 186 | C0 | 1 | 0 | 3,4,8,9 | 2 | 2 | 6 | 2 |
| 187 | C0 | 1 | 0 | 1,3,5,7,9 | 2 | 1 | 6 | 2 |

| 188 | C0 | 1 | 0 | 0,1,2,3,4,5,6,7,8,9 | 8 | 1 | 3 | 2 |
|---|---|---|---|---|---|---|---|---|
| 189 | C2 | 16 | 1 | 9 | 2 | 2 | 2 | 6 |
| 190 | C2 | 8 | 1 | 9 | 2 | 2 | 2 | 6 |
| 191 | C2 | 4 | 1 | 9 | 2 | 1 | 2 | 6 |
| 192 | C2 | 2 | 1 | 9 | 2 | 1 | 2 | 6 |
| 193 | C2 | 2 | 1 | 8,9 | 2 | 2 | 2 | 6 |
| 194 | C2 | 2 | 1 | 7,9 | 2 | 1 | 2 | 6 |
| 195 | C2 | 2 | 1 | 7,9 | 8 | 1 | 1 | 6 |
| 196 | C2 | 2 | 1 | 4,9 | 8 | 1 | 1 | 6 |
| 197 | C2 | 2 | 1 | 4,9 | 2 | 2 | 2 | 6 |
| 198 | C2 | 2 | 1 | 2,3,4,7, 8,9 | 2 | 1 | 2 | 6 |
| 199 | C2 | 8 | 1 | 9 | 8 | 2 | 1 | 6 |
| 200 | C2 | 4 | 1 | 9 | 8 | 1 | 1 | 6 |
| 201 | C2 | 1 | 0 | 9 | 2 | 2 | 2 | 6 |
| 202 | C2 | 1 | 0 | 9 | 8 | 1 | 1 | 6 |

| 203 | C2 | 1 | 0 | 9 | 2 | 1 | 2 | 6 |
|---|---|---|---|---|---|---|---|---|
| 204 | C2 | 1 | 0 | 8,9 | 2 | 2 | 2 | 6 |
| 205 | C2 | 1 | 0 | 4,9 | 2 | 1 | 2 | 6 |
| 206 | C2 | 1 | 0 | 7,9 | 8 | 1 | 1 | 6 |
| 207 | C2 | 1 | 0 | 3,4,8,9 | 2 | 1 | 2 | 6 |
| 208 | C2 | 1 | 0 | 3,4,8,9 | 2 | 2 | 2 | 6 |
| 209 | C2 | 1 | 0 | 1,3,5,7,9 | 2 | 1 | 2 | 6 |
| 210 | C2 | 1 | 0 | 0,1,2,3,4, 5,6,7,8,9 | 8 | 1 | 1 | 6 |
| 211 | A1/B1 | 2 | 1 | 9 | 2 | 1 | 6 | 2 |
| 212 | A1/B1 | 2 | 1 | 4,9 | 8 | 1 | 3 | 2 |
| 213 | A1/B1 | 2 | 1 | 7,9 | 8 | 1 | 3 | 2 |
| 214 | A1/B1 | 2 | 1 | 7,9 | 2 | 1 | 6 | 2 |
| 215 | A1/B1 | 2 | 1 | 4,9 | 2 | 2 | 6 | 2 |
| 216 | A1/B1 | 2 | 1 | 8,9 | 2 | 2 | 6 | 2 |
| 217 | A1/B1 | 1 | 0 | 9 | 2 | 2 | 6 | 2 |
| 218 | A1/B1 | 1 | 0 | 9 | 8 | 1 | 3 | 2 |
| 219 | A1/B1 | 1 | 0 | 9 | 2 | 1 | 6 | 2 |
| 220 | A1/B1 | 1 | 0 | 8,9 | 2 | 2 | 6 | 2 |
| 221 | A1/B1 | 1 | 0 | 4,9 | 2 | 1 | 6 | 2 |
| 222 | A1/B1 | 1 | 0 | 7,9 | 8 | 1 | 3 | 2 |

| 223 | A1/B1 | 1 | 0 | 3,4,8,9 | 2 | 2 | 6 | 2 |
|---|---|---|---|---|---|---|---|---|
| 224 | A1/B1 | 1 | 0 | 1,3,5,7,9 | 2 | 1 | 6 | 2 |
| 225 | A1/B1 | 1 | 0 | 0,1,2,3,4,5,6,7,8,9 | 8 | 1 | 3 | 2 |
| 226 | A2/B2 | 2 | 1 | 9 | 0 | 1 | 3 | 4 |
| 227 | A2/B2 | 2 | 1 | 4,9 | 6 | 1 | 2 | 4 |
| 228 | A2/B2 | 2 | 1 | 7,9 | 6 | 1 | 2 | 4 |
| 229 | A2/B2 | 2 | 1 | 4,9 | 0 | 2 | 3 | 4 |
| 230 | A2/B2 | 2 | 1 | 8,9 | 0 | 2 | 3 | 4 |
| 231 | A2/B2 | 1 | 0 | 9 | 0 | 2 | 3 | 4 |
| 232 | A2/B2 | 1 | 0 | 9 | 6 | 1 | 2 | 4 |
| 233 | A2/B2 | 1 | 0 | 9 | 0 | 1 | 3 | 4 |

| 234 | A2/B2 | 1 | 0 | 8,9 | 0 | 2 | 3 | 4 |
|---|---|---|---|---|---|---|---|---|
| 235 | A2/B2 | 1 | 0 | 4,9 | 0 | 1 | 3 | 4 |
| 236 | A2/B2 | 1 | 0 | 7,9 | 6 | 1 | 2 | 4 |
| 237 | A2/B2 | 1 | 0 | 3,4,8,9 | 0 | 1 | 3 | 4 |
| 238 | A2/B2 | 1 | 0 | 3,4,8,9 | 0 | 2 | 3 | 4 |
| 239 | A2/B2 | 1 | 0 | 1,3,5,7,9 | 0 | 1 | 3 | 4 |
| 240 | A2/B2 | 1 | 0 | 0,1,2,3,4,5,6,7,8,9 | 6 | 1 | 2 | 4 |
| 241 | A3/B3 | 2 | 1 | 9 | 0 | 1 | 2 | 6 |
| 242 | A3/B3 | 2 | 1 | 4,9 | 2 | 1 | 2 | 6 |
| 243 | A3/B3 | 2 | 1 | 7,9 | 0 | 1 | 2 | 6 |
| 244 | A3/B3 | 2 | 1 | 7,9 | 2 | 1 | 2 | 6 |
| 245 | A3/B3 | 2 | 1 | 4,9 | 0 | 2 | 2 | 6 |
| 246 | A3/B3 | 2 | 1 | 8,9 | 0 | 2 | 2 | 6 |
| 247 | A3/B3 | 1 | 0 | 9 | 0 | 2 | 2 | 6 |
| 248 | A3/B3 | 1 | 0 | 9 | 2 | 1 | 2 | 6 |
| 249 | A3/B3 | 1 | 0 | 9 | 0 | 1 | 2 | 6 |
| 250 | A3/B3 | 1 | 0 | 8,9 | 0 | 2 | 2 | 6 |
| 251 | A3/B3 | 1 | 0 | 4,9 | 0 | 1 | 2 | 6 |
| 252 | A3/B3 | 1 | 0 | 7,9 | 2 | 1 | 2 | 6 |
| 253 | A3/B3 | 1 | 0 | 3,4,8,9 | 0 | 2 | 2 | 6 |
| 254 | A3/B3 | 1 | 0 | 1,3,5,7,9 | 0 | 1 | 2 | 6 |
| 255 | A3/B3 | 1 | 0 | 0,1,2,3,4,5,6,7,8,9 | 2 | 1 | 2 | 6 |
| 256 | 0 | 16 | 1 | 7 | 0 | - | - | 0 |

| 257 | 0 | 8 | 1 | 7 | 0 | - | - | 0 |
|---|---|---|---|---|---|---|---|---|
| 258 | 0 | 4 | 1 | 7 | 0 | - | - | 0 |
| 259 | 0 | 2 | 0 | 7 | 0 | - | - | 0 |
| 260 | 0 | 2 | 1 | 7 | 0 | - | - | 0 |
| 261 | 0 | 2 | 0 | 2 | 0 | - | - | 0 |
| 262 | 0 | 2 | 1 | 2 | 0 | - | - | 0 |

[Table 4]

Table 6.3.3.2-4: Random access configurations for FR2 and unpaired spectrum.

| PRACH Configuration index | Preamble format | $n_{SFN} \bmod x = y$ | | Subframe number | Starting symbol | Number of PRACH slots within a subframe | $N^{RA,slot}$, number of time-domain PRACH ccasions within a PRACH slot | $N^{RA}_{dur}$, PRACH duration |
|---|---|---|---|---|---|---|---|---|
| | | x | y | | | | | |
| 0 | A1 | 16 | 1 | 4,9,14,19, 24,29,34,39 | 0 | 2 | 6 | 2 |
| 1 | A1 | 16 | 1 | 3,7,11,15, 19,23,27, 31,35,39 | 0 | 1 | 6 | 2 |
| 2 | A1 | 8 | 1,2 | 9,19,29,39 | 0 | 2 | 6 | 2 |
| 3 | A1 | 8 | 1 | 4,9,14,19, 24,29,34,39 | 0 | 2 | 6 | 2 |
| 4 | A1 | 8 | 1 | 3,7,11,15, 19,23,27,31, 35,39 | 0 | 1 | 6 | 2 |
| 5 | A1 | 4 | 1 | 4,9,14,19, 24,29,34,39 | 0 | 1 | 6 | 2 |
| 6 | A1 | 4 | 1 | 4,9,14,19, 24,29,34,39 | 0 | 2 | 6 | 2 |
| 7 | A1 | 4 | 1 | 3,7,11,15, 19,23,27,31, 35,39 | 0 | 1 | 6 | 2 |
| 8 | A1 | 2 | 1 | 7,15,23,31, 39 | 0 | 2 | 6 | 2 |
| 9 | A1 | 2 | 1 | 4,9,14,19, 24,29,34,39 | 0 | 1 | 6 | 2 |
| 10 | A1 | 2 | 1 | 4,9,14,19, 24,29,34,39 | 0 | 2 | 6 | 2 |

| | | | | | | | | |
|---|---|---|---|---|---|---|---|---|
| 11 | A1 | 2 | 1 | 3,7,11,15, 19,23,27,31, 35,39 | 0 | 1 | 6 | 2 |
| 12 | A1 | 1 | 0 | 19,39 | 7 | 1 | 3 | 2 |
| 13 | A1 | 1 | 0 | 3,5,7 | 0 | 1 | 6 | 2 |
| 14 | A1 | 1 | 0 | 24,29,34,39 | 7 | 1 | 3 | 2 |
| 15 | A1 | 1 | 0 | 9,19,29,39 | 7 | 2 | 3 | 2 |
| 16 | A1 | 1 | 0 | 17,19,37,39 | 0 | 1 | 6 | 2 |
| 17 | A1 | 1 | 0 | 9,19,29,39 | 0 | 2 | 6 | 2 |
| 18 | A1 | 1 | 0 | 4,9,14,19, 24,29,34,39 | 0 | 1 | 6 | 2 |
| 19 | A1 | 1 | 0 | 4,9,14,19, 24,29,34,39 | 7 | 1 | 3 | 2 |
| 20 | A1 | 1 | 0 | 3,5,7,9, 11,13 | 7 | 1 | 3 | 2 |
| 21 | A1 | 1 | 0 | 23,27,31,35, 39 | 7 | 1 | 3 | 2 |
| 22 | A1 | 1 | 0 | 7,15,23,31, 39 | 0 | 1 | 6 | 2 |
| 23 | A1 | 1 | 0 | 23,27,31,35, 39 | 0 | 1 | 6 | 2 |
| 24 | A1 | 1 | 0 | 13,14,15, 29, 30,31,37,38, 39 | 7 | 2 | 3 | 2 |
| 25 | A1 | 1 | 0 | 3,7,11,15, 19,23,27,31, 35,39 | 7 | 1 | 3 | 2 |
| 26 | A1 | 1 | 0 | 3,7,11,15, 19,23,27,31, 35,39 | 0 | 1 | 6 | 2 |
| 27 | A1 | 1 | 0 | 1,3,5,7, …,37,39 | 0 | 1 | 6 | 2 |
| 28 | A1 | 1 | 0 | 0,1,2, …,39 | 7 | 1 | 3 | 2 |
| 29 | A2 | 16 | 1 | 4,9,14,19, 24,29,34,39 | 0 | 2 | 3 | 4 |
| 30 | A2 | 16 | 1 | 3,7,11,15, 19,23,27,31, 35,39 | 0 | 1 | 3 | 4 |
| 31 | A2 | 8 | 1 | 4,9,14,19, 24,29,34,39 | 0 | 2 | 3 | 4 |

| 32 | A2 | 8 | 1 | 3,7,11,15, 19,23,27,31, 35,39 | 0 | 1 | 3 | 4 |
|---|---|---|---|---|---|---|---|---|
| 33 | A2 | 8 | 1,2 | 9,19,29,39 | 0 | 2 | 3 | 4 |
| 34 | A2 | 4 | 1 | 4,9,14,19, 24,29,34,39 | 0 | 1 | 3 | 4 |
| 35 | A2 | 4 | 1 | 4,9,14,19 ,24,29,34,39 | 0 | 2 | 3 | 4 |
| 36 | A2 | 4 | 1 | 3,7,11,15, 19,23,27,31 ,35,39 | 0 | 1 | 3 | 4 |
| 37 | A2 | 2 | 1 | 7,15,23,31 ,39 | 0 | 2 | 3 | 4 |
| 38 | A2 | 2 | 1 | 4,9,14,19, 24,29,34,39 | 0 | 1 | 3 | 4 |
| 39 | A2 | 2 | 1 | 4,9,14,19, 24,29,34,39 | 0 | 2 | 3 | 4 |
| 40 | A2 | 2 | 1 | 3,7,11,15, 19,23,27,31 ,35,39 | 0 | 1 | 3 | 4 |
| 41 | A2 | 1 | 0 | 19,39 | 5 | 1 | 2 | 4 |
| 42 | A2 | 1 | 0 | 3,5,7 | 0 | 1 | 3 | 4 |
| 43 | A2 | 1 | 0 | 24,29,34,39 | 5 | 1 | 2 | 4 |
| 44 | A2 | 1 | 0 | 9,19,29,39 | 5 | 2 | 2 | 4 |
| 45 | A2 | 1 | 0 | 17,19,37,39 | 0 | 1 | 3 | 4 |
| 46 | A2 | 1 | 0 | 9, 19, 29, 39 | 0 | 2 | 3 | 4 |
| 47 | A2 | 1 | 0 | 7,15,23,31, 39 | 0 | 1 | 3 | 4 |
| 48 | A2 | 1 | 0 | 23,27,31,35, 39 | 5 | 1 | 2 | 4 |
| 49 | A2 | 1 | 0 | 23,27,31,35, 39 | 0 | 1 | 3 | 4 |
| 50 | A2 | 1 | 0 | 3,5,7,9, 11,13 | 5 | 1 | 2 | 4 |
| 51 | A2 | 1 | 0 | 3,5,7,9, 11,13 | 0 | 1 | 3 | 4 |
| 52 | A2 | 1 | 0 | 4,9,14,19, 24,29,34,39 | 5 | 1 | 2 | 4 |
| 53 | A2 | 1 | 0 | 4,9,14,19, 24,29,34,39 | 0 | 1 | 3 | 4 |

| | | | | | | | | |
|---|---|---|---|---|---|---|---|---|
| 54 | A2 | 1 | 0 | 13,14,15, 29, 30,31,37,38, 39 | 5 | 2 | 2 | 4 |
| 55 | A2 | 1 | 0 | 3,7,11,15, 19,23,27,31, 35,39 | 5 | 1 | 2 | 4 |
| 56 | A2 | 1 | 0 | 3,7,11,15, 19,23,27,31, 35,39 | 0 | 1 | 3 | 4 |
| 57 | A2 | 1 | 0 | 1,3,5,7, …,37,39 | 0 | 1 | 3 | 4 |
| 58 | A2 | 1 | 0 | 0,1,2, …,39 | 5 | 1 | 2 | 4 |
| 59 | A3 | 16 | 1 | 4,9,14,19, 24,29,34,39 | 0 | 2 | 2 | 6 |
| 60 | A3 | 16 | 1 | 3,7,11,15, 19,23,27,31, 35,39 | 0 | 1 | 2 | 6 |
| 61 | A3 | 8 | 1 | 4,9,14,19 ,24,29,34,39 | 0 | 2 | 2 | 6 |
| 62 | A3 | 8 | 1 | 3,7,11,15, 19,23,27,31, 35,39 | 0 | 1 | 2 | 6 |
| 63 | A3 | 8 | 1,2 | 9,19,29,39 | 0 | 2 | 2 | 6 |
| 64 | A3 | 4 | 1 | 4,9,14,19 ,24,29,34,39 | 0 | 1 | 2 | 6 |
| 65 | A3 | 4 | 1 | 4,9,14,19, 24,29,34,39 | 0 | 2 | 2 | 6 |
| 66 | A3 | 4 | 1 | 3,7,11,15,19 ,23,27,31,35,39 | 0 | 1 | 2 | 6 |
| 67 | A3 | 2 | 1 | 4,9,14,19, 24,29,34,39 | 0 | 1 | 2 | 6 |
| 68 | A3 | 2 | 1 | 4,9,14,19, 24,29,34,39 | 0 | 2 | 2 | 6 |
| 69 | A3 | 2 | 1 | 3,7,11,15,19, 23,27,31,35,39 | 0 | 1 | 2 | 6 |
| 70 | A3 | 1 | 0 | 19,39 | 7 | 1 | 1 | 6 |
| 71 | A3 | 1 | 0 | 3,5,7 | 0 | 1 | 2 | 6 |
| 72 | A3 | 1 | 0 | 9,11,13 | 2 | 1 | 2 | 6 |
| 73 | A3 | 1 | 0 | 24,29,34,39 | 7 | 1 | 1 | 6 |
| 74 | A3 | 1 | 0 | 9,19,29,39 | 7 | 2 | 1 | 6 |

| | | | | | | | | |
|---|---|---|---|---|---|---|---|---|
| 75 | A3 | 1 | 0 | 17,19,37,39 | 0 | 1 | 2 | 6 |
| 76 | A3 | 1 | 0 | 9,19,29,39 | 0 | 2 | 2 | 6 |
| 77 | A3 | 1 | 0 | 7,15,23,31,39 | 0 | 1 | 2 | 6 |
| 78 | A3 | 1 | 0 | 23,27,31,35,39 | 7 | 1 | 1 | 6 |
| 79 | A3 | 1 | 0 | 23,27,31,35,39 | 0 | 1 | 2 | 6 |
| 80 | A3 | 1 | 0 | 3,5,7,9,11,13 | 0 | 1 | 2 | 6 |
| 81 | A3 | 1 | 0 | 3,5,7,9,11,13 | 7 | 1 | 1 | 6 |
| 82 | A3 | 1 | 0 | 4,9,14,19, 24,29,34,39 | 0 | 1 | 2 | 6 |
| 83 | A3 | 1 | 0 | 4,9,14,19, 24,29,34,39 | 7 | 1 | 1 | 6 |
| 84 | A3 | 1 | 0 | 13,14,15, 29, 30,31,37,38,39 | 7 | 2 | 1 | 6 |
| 85 | A3 | 1 | 0 | 3,7,11,15,19, 23,27,31,35,39 | 7 | 1 | 1 | 6 |
| 86 | A3 | 1 | 0 | 3,7,11,15,19, 23,27,31,35,39 | 0 | 1 | 2 | 6 |
| 87 | A3 | 1 | 0 | 1,3,5,7, …,37,39 | 0 | 1 | 2 | 6 |
| 88 | A3 | 1 | 0 | 0,1,2,…,39 | 7 | 1 | 1 | 6 |
| 89 | B1 | 16 | 1 | 4,9,14,19, 24,29,34,39 | 2 | 2 | 6 | 2 |
| 90 | B1 | 8 | 1 | 4,9,14,19, 24,29,34,39 | 2 | 2 | 6 | 2 |
| 91 | B1 | 8 | 1,2 | 9,19,29,39 | 2 | 2 | 6 | 2 |
| 92 | B1 | 4 | 1 | 4,9,14,19, 24,29,34,39 | 2 | 2 | 6 | 2 |
| 93 | B1 | 2 | 1 | 4,9,14,19, 24,29,34,39 | 2 | 2 | 6 | 2 |
| 94 | B1 | 2 | 1 | 3,7,11,15,19, 23,27,31,35,39 | 2 | 1 | 6 | 2 |
| 95 | B1 | 1 | 0 | 19,39 | 8 | 1 | 3 | 2 |

| | | | | | | | | |
|---|---|---|---|---|---|---|---|---|
| 96 | B1 | 1 | 0 | 3,5,7 | 2 | 1 | 6 | 2 |
| 97 | B1 | 1 | 0 | 24,29,34,39 | 8 | 1 | 3 | 2 |
| 98 | B1 | 1 | 0 | 9,19,29,39 | 8 | 2 | 3 | 2 |
| 99 | B1 | 1 | 0 | 17,19,37,39 | 2 | 1 | 6 | 2 |

| 100 | B1 | 1 | 0 | 9,19,29,39 | 2 | 2 | 6 | 2 |
|---|---|---|---|---|---|---|---|---|
| 101 | B1 | 1 | 0 | 7,15,23,31,39 | 2 | 1 | 6 | 2 |
| 102 | B1 | 1 | 0 | 23,27,31,35,39 | 8 | 1 | 3 | 2 |
| 103 | B1 | 1 | 0 | 23,27,31,35,39 | 2 | 1 | 6 | 2 |
| 104 | B1 | 1 | 0 | 3,5,7,9,11,13 | 8 | 1 | 3 | 2 |
| 105 | B1 | 1 | 0 | 4,9,14,19,<br>24,29,34,39 | 8 | 1 | 3 | 2 |
| 106 | B1 | 1 | 0 | 4,9,14,19,<br>24,29,34,39 | 2 | 1 | 6 | 2 |
| 107 | B1 | 1 | 0 | 3,7,11,15,19,<br>23,27,31,35,39 | 8 | 1 | 3 | 2 |
| 108 | B1 | 1 | 0 | 13,14,15, 29,<br>30,31,37,38,39 | 8 | 2 | 3 | 2 |
| 109 | B1 | 1 | 0 | 3,7,11,15,19,<br>23,27,31,35,39 | 2 | 1 | 6 | 2 |
| 110 | B1 | 1 | 0 | 1,3,5,7,…<br>,37,39 | 2 | 1 | 6 | 2 |
| 111 | B1 | 1 | 0 | 0,1,2,…,39 | 8 | 1 | 3 | 2 |
| 112 | B4 | 16 | 1,2 | 4,9,14,19,<br>24,29,34,39 | 0 | 2 | 1 | 12 |
| 113 | B4 | 16 | 1,2 | 3,7,11,15,19,<br>23,27,31,35,39 | 0 | 1 | 1 | 12 |
| 114 | B4 | 8 | 1,2 | 4,9,14,19,<br>24,29,34,39 | 0 | 2 | 1 | 12 |
| 115 | B4 | 8 | 1,2 | 3,7,11,15,19,<br>23,27,31,35,39 | 0 | 1 | 1 | 12 |
| 116 | B4 | 8 | 1,2 | 9,19,29,39 | 0 | 2 | 1 | 12 |
| 117 | B4 | 4 | 1 | 4,9,14,19,<br>24,29,34,39 | 0 | 1 | 1 | 12 |

| 118 | B4 | 4 | 1 | 4,9,14,19,<br>24,29,34,39 | 0 | 2 | 1 | 12 |
|---|---|---|---|---|---|---|---|---|
| 119 | B4 | 4 | 1,2 | 3,7,11,15,19,<br>23,27,31,35,39 | 0 | 1 | 1 | 12 |
| 120 | B4 | 2 | 1 | 7,15,23,31,39 | 2 | 2 | 1 | 12 |
| 121 | B4 | 2 | 1 | 4,9,14,19,<br>24,29,34,39 | 0 | 1 | 1 | 12 |
| 122 | B4 | 2 | 1 | 4,9,14,19, | 0 | 2 | 1 | 12 |

| | | | | 24,29,34,39 | | | | |
|---|---|---|---|---|---|---|---|---|
| 123 | B4 | 2 | 1 | 3,7,11,15,19, 23,27,31,35,39 | 0 | 1 | 1 | 12 |
| 124 | B4 | 1 | 0 | 19, 39 | 2 | 2 | 1 | 12 |
| 125 | B4 | 1 | 0 | 17, 19, 37, 39 | 0 | 1 | 1 | 12 |
| 126 | B4 | 1 | 0 | 24,29,34,39 | 2 | 1 | 1 | 12 |
| 127 | B4 | 1 | 0 | 9,19,29,39 | 2 | 2 | 1 | 12 |
| 128 | B4 | 1 | 0 | 9,19,29,39 | 0 | 2 | 1 | 12 |
| 129 | B4 | 1 | 0 | 7,15,23,31,39 | 0 | 1 | 1 | 12 |
| 130 | B4 | 1 | 0 | 7,15,23,31,39 | 0 | 2 | 1 | 12 |
| 131 | B4 | 1 | 0 | 23,27,31,35,39 | 0 | 1 | 1 | 12 |
| 132 | B4 | 1 | 0 | 23,27,31,35,39 | 2 | 2 | 1 | 12 |
| 133 | B4 | 1 | 0 | 9,11,13,15,17,19 | 0 | 1 | 1 | 12 |
| 134 | B4 | 1 | 0 | 3,5,7,9,11,13 | 2 | 1 | 1 | 12 |
| 135 | B4 | 1 | 0 | 4,9,14,19, 24,29,34,39 | 0 | 1 | 1 | 12 |
| 136 | B4 | 1 | 0 | 4,9,14,19, 24,29,34,39 | 2 | 2 | 1 | 12 |
| 137 | B4 | 1 | 0 | 13,14,15, 29, 30,31,37,38,39 | 2 | 2 | 1 | 12 |
| 138 | B4 | 1 | 0 | 3,7,11,15,19, 23,27,31,35,39 | 0 | 1 | 1 | 12 |
| 139 | B4 | 1 | 0 | 3,7,11,15,19, 23,27,31,35,39 | 2 | 1 | 1 | 12 |

| | | | | | | | | |
|---|---|---|---|---|---|---|---|---|
| 140 | B4 | 1 | 0 | 3, 5, 7, …, 23,25 | 2 | 1 | 1 | 12 |
| 141 | B4 | 1 | 0 | 3, 5, 7, …, 23,25 | 0 | 2 | 1 | 12 |
| 142 | B4 | 1 | 0 | 1,3,5,7,…, 37,39 | 0 | 1 | 1 | 12 |
| 143 | B4 | 1 | 0 | 0, 1, 2,…, 39 | 2 | 1 | 1 | 12 |
| 144 | C0 | 16 | 1 | 4,9,14,19, 24,29,34,39 | 0 | 2 | 7 | 2 |

| 145 | C0 | 16 | 1 | 3,7,11,15,19, 23,27,31,35,39 | 0 | 1 | 7 | 2 |
|---|---|---|---|---|---|---|---|---|
| 146 | C0 | 8 | 1 | 4,9,14,19,24, 29,34,39 | 0 | 1 | 7 | 2 |
| 147 | C0 | 8 | 1 | 3,7,11,15,19 ,23,27,31,35,39 | 0 | 1 | 7 | 2 |
| 148 | C0 | 8 | 1,2 | 9,19,29,39 | 0 | 2 | 7 | 2 |
| 149 | C0 | 4 | 1 | 4,9,14,19, 24,29,34,39 | 0 | 1 | 7 | 2 |
| 150 | C0 | 4 | 1 | 4,9,14,19, 24,29,34,39 | 0 | 2 | 7 | 2 |
| 151 | C0 | 4 | 1 | 3,7,11,15,19, 23,27,31,35,39 | 0 | 1 | 7 | 2 |
| 152 | C0 | 2 | 1 | 7,15,23,31,39 | 0 | 2 | 7 | 2 |
| 153 | C0 | 2 | 1 | 4,9,14,19, 24,29,34,39 | 0 | 1 | 7 | 2 |
| 154 | C0 | 2 | 1 | 4,9,14,19, 24,29,34,39 | 0 | 2 | 7 | 2 |
| 155 | C0 | 2 | 1 | 3,7,11,15,19, 23,27,31,35,39 | 0 | 1 | 7 | 2 |
| 156 | C0 | 1 | 0 | 19,39 | 8 | 1 | 3 | 2 |
| 157 | C0 | 1 | 0 | 3,5,7 | 0 | 1 | 7 | 2 |
| 158 | C0 | 1 | 0 | 24,29,34,39 | 8 | 1 | 3 | 2 |
| 159 | C0 | 1 | 0 | 9,19,29,39 | 8 | 2 | 3 | 2 |
| 160 | C0 | 1 | 0 | 17,19,37,39 | 0 | 1 | 7 | 2 |
| 161 | C0 | 1 | 0 | 9,19,29,39 | 0 | 2 | 7 | 2 |

| 162 | C0 | 1 | 0 | 23,27,31,35,39 | 8 | 1 | 3 | 2 |
|---|---|---|---|---|---|---|---|---|
| 163 | C0 | 1 | 0 | 7,15,23,31,39 | 0 | 1 | 7 | 2 |
| 164 | C0 | 1 | 0 | 23,27,31,35,39 | 0 | 1 | 7 | 2 |
| 165 | C0 | 1 | 0 | 3,5,7,9,11,13 | 8 | 1 | 3 | 2 |
| 166 | C0 | 1 | 0 | 4,9,14,19, 24,29,34,39 | 8 | 1 | 3 | 2 |
| 167 | C0 | 1 | 0 | 4,9,14,19, 24,29,34,39 | 0 | 1 | 7 | 2 |
| 168 | C0 | 1 | 0 | 13,14,15, 29, 30,31,37,38,39 | 8 | 2 | 3 | 2 |

| 169 | C0 | 1 | 0 | 3,7,11,15,19, 23,27,31,35,39 | 8 | 1 | 3 | 2 |
|---|---|---|---|---|---|---|---|---|
| 170 | C0 | 1 | 0 | 3,7,11,15,19, 23,27,31,35,39 | 0 | 1 | 7 | 2 |
| 171 | C0 | 1 | 0 | 1,3,5,7 ,...,37,39 | 0 | 1 | 7 | 2 |
| 172 | C0 | 1 | 0 | 0,1,2, ...,39 | 8 | 1 | 3 | 2 |
| 173 | C2 | 16 | 1 | 4,9,14,19, 24,29,34,39 | 0 | 2 | 2 | 6 |
| 174 | C2 | 16 | 1 | 3,7,11,15,19, 23,27,31,35,39 | 0 | 1 | 2 | 6 |
| 175 | C2 | 8 | 1 | 4,9,14,19, 24,29,34,39 | 0 | 2 | 2 | 6 |
| 176 | C2 | 8 | 1 | 3,7,11,15,19, 23,27,31,35,39 | 0 | 1 | 2 | 6 |
| 177 | C2 | 8 | 1,2 | 9,19,29,39 | 0 | 2 | 2 | 6 |
| 178 | C2 | 4 | 1 | 4,9,14,19, 24,29,34,39 | 0 | 1 | 2 | 6 |
| 179 | C2 | 4 | 1 | 4,9,14,19, 24,29,34,39 | 0 | 2 | 2 | 6 |
| 180 | C2 | 4 | 1 | 3,7,11,15,19, 23,27,31,35,39 | 0 | 1 | 2 | 6 |
| 181 | C2 | 2 | 1 | 7,15,23,31,39 | 2 | 2 | 2 | 6 |
| 182 | C2 | 2 | 1 | 4,9,14,19, 24,29,34,39 | 0 | 1 | 2 | 6 |

| 183 | C2 | 2 | 1 | 4,9,14,19, 24,29,34,39 | 0 | 2 | 2 | 6 |
|---|---|---|---|---|---|---|---|---|
| 184 | C2 | 2 | 1 | 3,7,11,15,19, 23,27,31,35,39 | 0 | 1 | 2 | 6 |
| 185 | C2 | 1 | 0 | 19,39 | 2 | 1 | 2 | 6 |
| 186 | C2 | 1 | 0 | 3,5,7 | 0 | 1 | 2 | 6 |
| 187 | C2 | 1 | 0 | 24,29,34,39 | 7 | 1 | 1 | 6 |
| 188 | C2 | 1 | 0 | 9,19,29,39 | 7 | 2 | 1 | 6 |
| 189 | C2 | 1 | 0 | 17,19,37,39 | 0 | 1 | 2 | 6 |
| 190 | C2 | 1 | 0 | 9,19,29,39 | 2 | 2 | 2 | 6 |
| 191 | C2 | 1 | 0 | 7,15,23, 31,39 | 2 | 1 | 2 | 6 |

| 192 | C2 | 1 | 0 | 3,5,7,9,11,13 | 7 | 1 | 1 | 6 |
|---|---|---|---|---|---|---|---|---|
| 193 | C2 | 1 | 0 | 23,27,31,35,39 | 7 | 2 | 1 | 6 |
| 194 | C2 | 1 | 0 | 23,27,31,35,39 | 0 | 1 | 2 | 6 |
| 195 | C2 | 1 | 0 | 4,9,14,19,24, 29,34,39 | 7 | 2 | 1 | 6 |
| 196 | C2 | 1 | 0 | 4,9,14,19, 24,29,34,39 | 2 | 1 | 2 | 6 |
| 197 | C2 | 1 | 0 | 13,14,15, 29, 30,31,37,38,39 | 7 | 2 | 1 | 6 |
| 198 | C2 | 1 | 0 | 3,7,11,15,19, 23,27,31,35,39 | 7 | 1 | 1 | 6 |
| 199 | C2 | 1 | 0 | 3,7,11,15,19, 23,27,31,35,39 | 0 | 1 | 2 | 6 |
| 200 | C2 | 1 | 0 | 1,3,5,7, …,37,39 | 0 | 1 | 2 | 6 |
| 201 | C2 | 1 | 0 | 0,1,2,…,39 | 7 | 1 | 1 | 6 |
| 202 | A1/B1 | 16 | 1 | 4,9,14,19,24, 29,34,39 | 2 | 1 | 6 | 2 |
| 203 | A1/B1 | 16 | 1 | 3,7,11,15,19 ,23,27,31,35,39 | 2 | 1 | 6 | 2 |
| 204 | A1/B1 | 8 | 1 | 4,9,14,19 ,24,29,34,39 | 2 | 1 | 6 | 2 |

| 205 | A1/B1 | 8 | 1 | 3,7,11,15,19, 23,27,31,35,39 | 2 | 1 | 6 | 2 |
|---|---|---|---|---|---|---|---|---|
| 206 | A1/B1 | 4 | 1 | 4,9,14,19, 24,29,34,39 | 2 | 1 | 6 | 2 |
| 207 | A1/B1 | 4 | 1 | 3,7,11,15,19, 23,27,31,35,39 | 2 | 1 | 6 | 2 |
| 208 | A1/B1 | 2 | 1 | 4,9,14,19,24,29,34,39 | 2 | 1 | 6 | 2 |
| 209 | A1/B1 | 1 | 0 | 19,39 | 8 | 1 | 3 | 2 |
| 210 | A1/B1 | 1 | 0 | 9,19,29,39 | 8 | 1 | 3 | 2 |
| 211 | A1/B1 | 1 | 0 | 17,19,37,39 | 2 | 1 | 6 | 2 |
| 212 | A1/B1 | 1 | 0 | 9,19,29,39 | 2 | 2 | 6 | 2 |
| 213 | A1/B1 | 1 | 0 | 23,27,31,35,39 | 8 | 1 | 3 | 2 |
| 214 | A1/B1 | 1 | EP | 7,15,23,31,39 | 2 | 1 | 6 | 2 |

| 215 | A1/B1 | 1 | 0 | 23,27,31,35,39 | 2 | 1 | 6 | 2 |
|---|---|---|---|---|---|---|---|---|
| 216 | A1/B1 | 1 | 0 | 4,9,14,19, 24,29,34,39 | 8 | 1 | 3 | 2 |
| 217 | A1/B1 | 1 | 0 | 4,9,14,19, 24,29,34,39 | 2 | 1 | 6 | 2 |
| 218 | A1/B1 | 1 | 0 | 3,7,11,15,19, 23,27,31,35,39 | 2 | 1 | 6 | 2 |
| 219 | A1/B1 | 1 | 0 | 1,3,5,7 ,...,37,39 | 2 | 1 | 6 | 2 |
| 220 | A2/B2 | 16 | 1 | 4,9,14,19 ,24,29,34,39 | 2 | 1 | 3 | 4 |
| 221 | A2/B2 | 16 | 1 | 3,7,11,15,19, 23,27,31,35,39 | 2 | 1 | 3 | 4 |
| 222 | A2/B2 | 8 | 1 | 4,9,14,19, 24,29,34,39 | 2 | 1 | 3 | 4 |
| 223 | A2/B2 | 8 | 1 | 3,7,11,15,19, 23,27,31,35,39 | 2 | 1 | 3 | 4 |
| 224 | A2/B2 | 4 | 1 | 4,9,14,19, 24,29,34,39 | 2 | 1 | 3 | 4 |
| 225 | A2/B2 | 4 | 1 | 3,7,11,15,19, 23,27,31,35,39 | 2 | 1 | 3 | 4 |

| 226 | A2/B2 | 2 | 1 | 4,9,14,19, 24,29,34,39 | 2 | 1 | 3 | 4 |
|---|---|---|---|---|---|---|---|---|
| 227 | A2/B2 | 1 | 0 | 19,39 | 6 | 1 | 2 | 4 |
| 228 | A2/B2 | 1 | 0 | 9,19,29,39 | 6 | 1 | 2 | 4 |
| 229 | A2/B2 | 1 | 0 | 17,19,37,39 | 2 | 1 | 3 | 4 |
| 230 | A2/B2 | 1 | 0 | 9,19,29,39 | 2 | 2 | 3 | 4 |
| 231 | A2/B2 | 1 | 0 | 23,27,31,35,39 | 6 | 1 | 2 | 4 |
| 232 | A2/B2 | 1 | 0 | 7,15,23,31,39 | 2 | 1 | 3 | 4 |
| 233 | A2/B2 | 1 | 0 | 23,27,31,35,39 | 2 | 1 | 3 | 4 |
| 234 | A2/B2 | 1 | 0 | 4,9,14,19, 24,29,34,39 | 6 | 1 | 2 | 4 |
| 235 | A2/B2 | 1 | 0 | 4,9,14,19, 24,29,34,39 | 2 | 1 | 3 | 4 |
| 236 | A2/B2 | 1 | 0 | 3,7,11,15,19, 23,27,31,35,39 | 2 | 1 | 3 | 4 |
| 237 | A2/B2 | 1 | 0 | 1,3,5,7,... | 2 | 1 | 3 | 4 |

| | | | | ,37,39 | | | | |
|---|---|---|---|---|---|---|---|---|
| 238 | A3/B3 | 16 | 1 | 4,9,14,19, 24,29,34,39 | 2 | 1 | 2 | 6 |
| 239 | A3/B3 | 16 | 1 | 3,7,11,15,19, 23,27,31,35,39 | 2 | 1 | 2 | 6 |
| 240 | A3/B3 | 8 | 1 | 4,9,14,19, 24,29,34,39 | 2 | 1 | 2 | 6 |
| 241 | A3/B3 | 8 | 1 | 3,7,11,15,19, 23,27,31,35,39 | 2 | 1 | 2 | 6 |
| 242 | A3/B3 | 4 | 1 | 4,9,14,19, 24,29,34,39 | 2 | 1 | 2 | 6 |
| 243 | A3/B3 | 4 | 1 | 3,7,11,15,19, 23,27,31,35,39 | 2 | 1 | 2 | 6 |
| 244 | A3/B3 | 2 | 1 | 4,9,14,19, 24,29,34,39 | 2 | 1 | 2 | 6 |
| 245 | A3/B3 | 1 | 0 | 19,39 | 2 | 1 | 2 | 6 |
| 246 | A3/B3 | 1 | 0 | 9,19,29,39 | 2 | 1 | 2 | 6 |
| 247 | A3/B3 | 1 | 0 | 17,19,37,39 | 2 | 1 | 2 | 6 |
| 248 | A3/B3 | 1 | 0 | 9,19,29,39 | 2 | 2 | 2 | 6 |

| | | | | | | | | |
|---|---|---|---|---|---|---|---|---|
| 249 | A3/B3 | 1 | 0 | 7,15,23,31,39 | 2 | 1 | 2 | 6 |
| 250 | A3/B3 | 1 | 0 | 23,27,31,35,39 | 2 | 1 | 2 | 6 |
| 251 | A3/B3 | 1 | 0 | 23,27,31,35,39 | 2 | 2 | 2 | 6 |
| 252 | A3/B3 | 1 | 0 | 4,9,14,19, 24,29,34,39 | 2 | 1 | 2 | 6 |
| 253 | A3/B3 | 1 | 0 | 4,9,14,19, 24,29,34,39 | 2 | 2 | 2 | 6 |
| 254 | A3/B3 | 1 | 0 | 3,7,11,15,19, 23,27,31,35,39 | 2 | 1 | 2 | 6 |
| 255 | A3/B3 | 1 | 0 | 1,3,5,7, …,37,39 | 2 | 1 | 2 | 6 |

For example, in embodiments described below, the ROs may be ROs based on one of Tables 2 to 4 above.

The contents described above can be applied by being combined with methods according to the present disclosure described below, or can be supplemented to clarify technical features of methods described in the present disclosure.

In addition, methods related to configuration of a PRACH transmission occasion described below are related to uplink transmission and can be equally applied to an uplink signal transmission method in the NR system (licensed band) or U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell (cell operating in the licensed band (L-band)) and/or a U-cell (cell operating in the unlicensed band (U-band)) defined in the NR system or the U-Band system.

NR supports multiple numerologies (or subcarrier spacing (SCS)) for supporting diverse 5G services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz to overcome phase noise.

An NR frequency band is defined as two types of frequency ranges FR1 and FR2. FR1 and FR2 may be configured as shown in Table 5 below. FR2 may mean millimeter wave (mmW).

[Table 5]

| Frequency Range designation | Corresponding frequency range | Subcarrier Spacing |
| --- | --- | --- |
| FR1 | 410MHz - 7125MHz | 15, 30, 60kHz |
| FR2 | 24250MHz - 52600MHz | 60, 120, 240kHz |

It is considered that the PRACH preamble is repeatedly transmitted for UL coverage enhancement of an existing NR system. At this time, it is necessary to define how a beam operation and/or a power control operate when the UE repeatedly transmits the PRACH preamble. Therefore, the present disclosure intends to propose a method for selecting a specific RO among multiple FDMed ROs when repeatedly transmitting the PRACH preamble and operations of the UE and the BS.

In the present disclosure, 'RO' may mean an RACH occasion or a PRACH occasion. In embodiments described below, the RO may be based on Tables 1 to 4. As an example, the configurations related to the RO in embodiments to be described below may be based on at least one of Tables 1 to 4. As an example, the number of PRACH occasions within a PRACH slot in embodiments to be described below may be based on Tables 2 to 4.

Selection method of specific RO among FDMed ROs

The BS may configure/indicate a repetition number in the UE for PRACH repetition transmissions (e.g., multiple transmissions of PRACH).

Thereafter, the UE may select/determine ROs mapped to a beam index of a best SSB based on SSB-to-RO mapping (see Table 1). It may be determined from which RO among the ROs the repeated transmission will start. In other words, a starting RO may be determined among the ROs. A scheme of determining the starting RO is described in detail below.

As an example, the starting RO may be determined by the UE. In other words, the terminal may autonomously determine from which RO among the selected ROs is to be repeatedly transmitted. As an example, the starting RO may be determined by the configuration/indication of the BS. The UE may perform repeated transmission from the starting RO configured/indicated by the BS. As an example, the starting RO may be defined in advance. The UE may perform the repeated transmission using an RO defined in advance as the starting RO.

At this time, when selecting/determining ROs for performing the repeated transmission, a case where multiple ROs mapped to a beam index (e.g., SS/PBCH block index) which the SSB selected by the UE (the best SSB) has are frequency division multiplexed (FDMed), and configured may be assumed. An operation/definition/configuration regarding which RO among the FDMed ROs the UE should select is required.

According to an embodiment, based on a value which the BS configures/indicates in the UE through a higher layer signaling (e.g., SIB, etc.), the corresponding UE may select a specific RO.

As an example, the BS may indicate a frequency resource index (f-domain index) of the specific RO among the multiple ROs in the UE through the higher layer signaling.

As an example, it may be assumed that the BS configures the number of ROs (which may have a same beam index) to be FDMed up to N through an SSB-to-RO mapping setting value (e.g., ssb-perRACH-OccasionAndCB-PreamblesPerSSB) and a total FDMed RO setting value (e.g., msg1-FDM). The BS may configure/indicate one among N FDMed ROs in the UE through the higher layer signaling (e.g., SIB, etc.). The UE may perform the repeated transmission by selecting a specific RO at a position configured/indicated by the BS among multiple FDMed ROs (having a same beam index).

According to an embodiment, which RO should be selected may be defined in advance between the UE and the BS.

As an example, when a plurality of FDMed ROs (having a same beam index) may be allocated, ROs for repeated transmissions of the PRACH may be defined as follows. The UE may perform the repeated transmission by selecting an RO continuously located at a lowest (or highest) frequency among the plurality of FDMed ROs having the same beam index. At this time, according to a preamble index, a cell-ID, an SFN index, etc., initially selected by the UE, a position of the corresponding specific RO on a frequency domain may be differently defined/configured.

As an example, for the first time, the UE may select/determine one RO among the multiple FDMed ROs having the same beam index. At this time, the one RO may be a starting RO of a RO group. The UE may select and configure ROs which are at a same position as a frequency position of the RO (starting RO) selected above. The frequency position may be based on a frequency resource index, a frequency domain index, or a resource block index (RB index). For example, a frequency domain based on the frequency position may mean a resource block (RB). In other words, the UE may determine/select one or more ROs having the same start RB as the start RO in an increasing order of time resource indexes after the starting RO.

As an example, when the UE selects an RO located at a highest (or lowest) frequency) among the multiple FDMed ROs having the same beam index initially, the UE may be configured to select the RO located at the highest (or lowest) frequency similarly even thereafter. The corresponding method may be preferably used when a reference RO for determining an RA-RNTI value is one among the FDMed ROs.

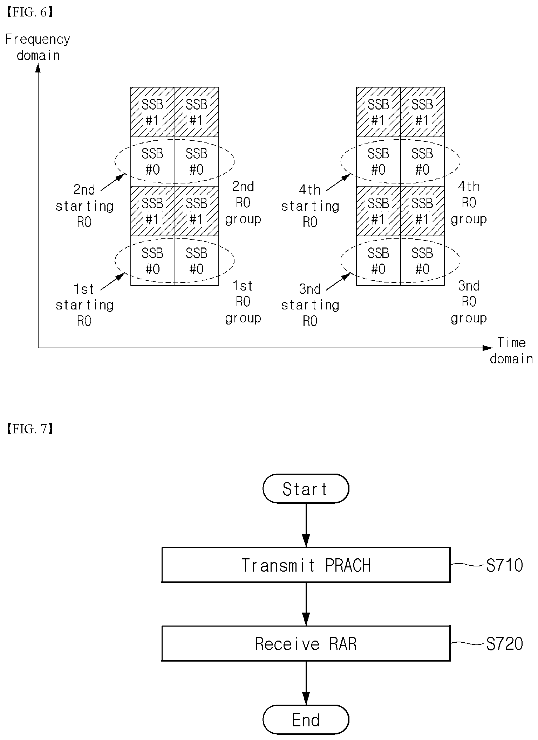

The configuration/determination of the RO group related to the embodiment described above is described with reference to FIG. 6.

FIG. 6 illustrates determination of an RO group according to an embodiment of the present disclosure.

Referring to FIG. 6, a starting RO (e.g., 1st starting RO) of an RO group (e.g., 1st RO group) may be based on one of ROs frequency multiplexed in a time domain. The remaining RO(s) in the RO group may have the same frequency location as the starting RO (e.g., a location based on a frequency resource index, a location of a starting RB based on an RB index). The starting RO and the remaining RO(s) in the RO group may be related to the same SSB index (e.g., SSB #0). More specifically, based on a frequency location related to the starting RO (e.g., a frequency resource index, an RB index, or a starting RB), the remaining ROs belonging to the RO group may be determined in an increasing order of (a time resource index (e.g., at least one of time domain resource index, symbol index, slot index, or subframe index) after the starting RO.

Table 6 below shows agreements related to multiple PRACH transmissions.

[Table 6]

| Agreement |
|---|
| • For multiple PRACH transmissions with same beam, at least support to use same PRACH preamble during the multiple PRACH transmissions in one RACH attempt. |
| **Agreement** |
| • For multiple PRACH transmissions with same beam, at least ROs located at different time instances can be utilized for the transmissions.<br><br>    - FFS: whether/how the starting RB of ROs can be different at different time instances for multiple PRACH transmissions.<br><br>    - FFS: whether/how multiple PRACH transmissions located in the same time instance, e.g., for UEs with multiple Tx chains. |
| **Agreement** |
| For multiple PRACH transmissions with same Tx beam, to differentiate the multiple PRACH transmissions with single PRACH transmission, consider one or multiple of the following options.<br><br>• Option 1: Multiple PRACH are transmitted with separate preamble on shared ROs.<br><br>• Option 2: Multiple PRACH are transmitted on separate ROs.<br><br>• Option 3: Partial of multiple PRACHs are transmitted with separate preamble on shared ROs, while the other multiple PRACHs are transmitted on separate ROs.<br><br>• Other options are not precluded.<br><br>• Note: Shared or separate RO/preamble means that the RO/preamble is shared or separated with single PRACH transmission. |
| **Agreement** |
| • For multiple PRACH transmissions with same Tx beam, at least SSB-RSRP threshold(s) are used to determine the number of PRACH transmissions at least for the first RACH attempt. |
| **Agreement** |

For multiple PRACH transmissions with same Tx beam, gNB can configure one or multiple values for the number of multiple PRACH transmissions.

    • If multiple values are configured, PRACH resources differentiation between multiple PRACH transmissions with different number of multiple PRACH transmissions is supported.

**Agreement**

For multiple PRACH transmissions with same Tx beam, "RO group" is assumed for multiple PRACH transmissions with separate preamble on shared ROs and/or multiple PRACH transmissions on separate ROs, and one RO group consists of valid RO(s) for a specific number of multiple PRACH transmissions.

Note 1: All ROs in one RO group is associated with the same SSB(s).

Note 2: Shared or separate RO/preamble means that the RO/preamble is shared or separated with single PRACH transmission.

Note 3: whether/how to define "RO group" in specification will be discussed separately

Note 4: Valid RO(s) refers to what is defined in existing specification

FFS: whether and how to address collision between valid ROs for multiple PRACH transmissions and other existing ROs for legacy single PRACH transmission or other features, e.g., 2-step RACH.

FFS: the time span of RO group.

FFS: whether and how ROs can be shared between different RO groups for different number of multiple PRACH transmissions.

FFS: other details

**Agreement**

Support {2, 4, 8} for the number of multiple PRACH transmissions with same Tx beams.

**Agreement**

• Multiple PRACH transmissions within one RACH attempt are only performed within one RO group.

    - The number of valid ROs in the RO group is equal to one of the configured number(s) of multiple PRACH transmissions.

• Note1: If only one value is configured for multiple PRACH transmissions, then the number of valid ROs in the RO group is equal to this value.

• Note2: If multiple values are configured for multiple PRACH transmissions, for each value, the number of valid ROs in the RO group is equal to the corresponding number of multiple PRACH transmissions.

• Note 3: Valid RO(s) refers to what is defined in existing specification.

Note: Valid RO(s) refers to what is defined in existing specification, i.e., Section 8.1 in TS 38.213.

**Agreement**

A set of RO group(s) for a configured number of multiple PRACH transmissions is determined/configured within a time period X, starting from frame 0. The determined/configured set of RO groups repeats every time period X.

    - The time period X is K SSB-to-RO association pattern periods.

    - Note: Whether/how to introduce SSB-to-RO group mapping

    - FFS: $K$ is configured by the network or determined based on some rule.

**Agreement**

RA-RNTI is calculated based on the last valid RO in the RO group corresponding to the multiple PRACH transmissions.

**Agreement**

For RO group determination for multiple PRACH transmissions, following parameters are considered.

• The candidate number of multiple PRACH transmissions, e.g {2,4,8}, is/are explicitly configured.

- The number of ROs within one RO group can be implicitly determined accordingly.

- Default value(s) is/are not precluded

The number of SSB-to-RO association pattern periods K within the time period X, down select from the following options.

- Option 1: $K$ is explicitly configured.

- Option 2: $K$ is implicitly determined

- Option 3: $K$ is a fixed value for all number of multiple PRACH transmissions.

• Determination of starting RO for each RO group for each value of the number of multiple PRACH transmissions, down select from the following options.

- Option 1: Index/indices of the starting RO(s) of the RO group(s) is/are explicitly indicated.

○ FFS: whether other parameters configured by gNB to allow density control and/or RO group(s) position alignment for multiple configured numbers

○ FFS: whether only the starting RO of the first RO group is explicitly indicated, and the starting ROs of the other RO groups are implicitly determined.

○ FFS: other ROs for each RO group

- Option 2: The time start position and the frequency start position of the first valid RO for each RO group are implicitly determined.

○ FFS: other ROs for each RO group

○ FFS: whether other parameters configured by gNB to allow density control and/or RO group(s) position alignment for multiple configured numbers

• FFS: The frequency hopping offset, if frequency hopping is supported.

• FFS: RO group specific preamble if multiple PRACH transmissions with different numbers are transmitted with separate preamble on shared ROs

• FFS: Time span of the RO group

All other legacy parameters for single PRACH transmission can be reused, if applicable.

**Agreement**

• For multiple PRACH transmissions with separate preamble on shared ROs, reuse legacy SSB to RO mapping rule, and only the ROs mapped to SSBs for single PRACH transmission can be used for multiple PRACH transmissions.

**Agreement**

• For multiple PRACH transmissions on separate ROs, down-select one of the following options:

- Option 1: SSB-to-RO group mapping is introduced.

- Option 2: Reuse legacy SSB to RO mapping rule

**Agreement**

For multiple PRACH transmissions on separate ROs, reuse legacy SSB to RO mapping rule.

**Agreement**

For a given number of N multiple PRACH transmissions, all the RO groups within a time period X are determined as follows:

• Firstly, the starting RO of the first RO group is determined, then its remaining ROs are determined. Next, the starting RO of other RO groups and its remaining ROs are determined sequentially.

the starting RO is determined as follows (down select only one of the Alt.):

Alt.1 (w/o density control)

(continued)

- the starting RO of the first RO group is the first valid RO within the time period X.

- the starting RO of other RO groups are determined as the first valid RO after the previous RO group in the following order within the time period X: first, in increasing order of frequency resource indexes for frequency multiplexed PRACH occasions; second, in increasing order of time resource indexes.

<div align="center">Alt.2 (w/ density control)</div>

- If a time offset is configured, then

➢ the starting RO of the first RO group for each $n_{RA}$ is determined from the first valid RO within the time period X, first in increasing order of frequency resource index for frequency multiplexed PRACH occasions; second in increasing order of time resource index.

➢ the starting RO of the n-th RO group for each $n_{\square\square}$ is determined as the RO at the time offset equal to a number of valid ROs from the starting RO of the (n-1)-th RO group for the same $n_{\square\square}$.

- If time offset is not configured, then Alt.1 Applies.

• It is not expected to have overlapping RO between any two RO groups for the given number of N multiple PRACH transmissions.

• the remaining N-1 ROs are the next N-1 ROs after the starting RO with increasing order of time resource indexes and associated with the same SSB(s) as the starting RO, and (down select only one of the Alt.)

➢ Alt. 1 (the starting RB of ROs within a RO group is the same) the N-1 ROs are with the same starting RB as the starting RO.

➢ Alt. 2 (the starting RB of ROs within a RO group can be different) the N-1 ROs are with the lowest frequency resource index in corresponding time instance.

➢ Alt. 3 (the starting RB of within a RO group can be different and a frequency offset is configured) the N-1 ROs are determined based on a configured frequency offset.

➢ Alt. 4 (the starting RB of ROs within a RO group can be different), the N-1 ROs are with the same relative frequency resource index among the multiple frequency multiplexing ROs associated with the same SSB in corresponding time instances.

**Agreement**

Add the following notes to the above agreement:

Note1: "the starting RO of other RO groups are determined as the first valid RO after the previous RO group in the following order within the time period X: first, in increasing order of frequency resource indexes for frequency multiplexed PRACH occasions; second, in increasing order of time resource indexes." is illustrated as in the following figure (N=2, for ROs associated with SSB#0). This works for both Alt.1 and Alt.2 for the starting RO determination.

Note2: all the ROs mentioned in the agreement are valid ROs associated with the given same SSB(s) and all the RO groups mentioned in the agreement are RO groups consisting of valid ROs associated with the given same SSB(s).

Note3: $n_{\square\square}$ of an RO, frequency resource index of an RO, and the starting RB of an RO indicate the same meaning, i.e., locate in the same frequency position.

**Agreement**

For a given number of N multiple PRACH transmissions, to determine the starting RO of all the RO groups within a time period X:

- If a time offset is configured, then

➢ the starting RO of the first RO group for each $n_{\square\square}$ is determined from the first valid RO within the time period X, first in increasing order of frequency resource index for frequency multiplexed PRACH occasions; second in increasing order of time resource index.

➢ the starting RO of the n-th RO group for each $n_{\square\square}$ is determined as the RO at the time offset equal to a number of valid ROs from the starting RO of the (n-1)-th RO group for the same $n_{\square\square}$.

--- If time offset is not configured, then

➢ the starting RO of the first RO group is the first valid RO within the time period X.

➢ the starting RO of other RO groups are determined as the first valid RO after the previous RO group in the following order within the time period X: first, in increasing order of frequency resource indexes for frequency multiplexed PRACH occasions; second, in increasing order of time resource indexes.

**Agreement**

(continued)

| |
|---|
| For the number of SSB-to-RO association pattern periods K within the time period X, <br> • For multiple PRACH transmissions with different numbers, support One common K is implicitly determined as a minimum integer for all the configured number of multiple PRACH transmissions such that for each of $N_{Tx}^{SSB}$ SSBs, there is at least one RO group per each configured number of multiple PRACH transmissions consisting of ROs associated with the SSB. <br> **Agreement** <br> For a given number of *N* multiple PRACH transmissions, the remaining *N-1* ROs are the next *N-1* ROs after the starting RO with increasing order of time resource indexes and associated with the same SSB(s) as the starting RO, to determine the remaining N-1 ROs: <br> the *N-1* ROs are with the same starting RB as the starting RO. |

The contents in Table 6 above may be referred to in order to clarify the definitions/operations of the embodiments described above. For example, the frequency resource index (or a location of a frequency domain) related to the starting RO in the RO group may be related to the starting RB.

RO hopping method between FDMed ROs

When the UE uses only an RO located in a specific frequency domain upon performing repeated transmission of a PRACH, it may be preferable that the frequency domain is equally used for each RO. In other words, it may be preferable that ROs located in different frequency domains are used by different UEs. However, in reality, there is a possibility that ROs located in a specific frequency domain will be used by different UEs. Therefore, in order to solve these problems, a RO hopping method between FDMed ROs may be considered.

As an example, the BS may configure/indicate an RO hopping pattern in the UE through the higher layer signaling (e.g., SIB, etc.). As a result, the corresponding UE may perform the repeated transmission while hopping the RO (e.g., the starting RO in the RO group). In other words, the UE may perform the repeated transmission while changing the frequency location of the RO based on the configured/indicated RO hopping pattern. According to the embodiment described above, when the RO group includes ROs selected in an increasing order of time resource indexes based on the frequency resource index related to the starting RO, the hopping of the RO according to the embodiment may mean hopping in the RO group (starting). For example, a frequency resource index related to a starting RO of a first RO group (any one RO group) among a plurality of RO groups may be different from a frequency resource index related to a starting RO of a second RO group (another RO group) among the plurality of RO groups.

The RO hopping pattern may have different initial values depending on a preamble index, a cell ID, an SFN index, and/or an f-domain RO index initially selected by the UE.

The BS may configure/indicate whether an RO hopping operation is enabled in the UE through the higher layer signaling (e.g., SIB, etc.). When the RO hopping operation is enabled, the UE may perform the PRACH repeated transmission while hopping the RO. When the RO hopping operation is disabled, the UE may perform the PRACH repeated transmission by using the RO defined in advance like the methods method above instead of the RO hopping.

The proposed method may be configured/applied to another UL signal/channel such as MSG3 PUSCH, MSGA Preamble/PUSCH, and/or PUSCH/PUCCH. It is obvious that since the examples of the proposed scheme described above may also be included as one of implementing methods of the present disclosure, the examples may be regarded as a kind of proposed schemes. Further, the proposed schemes described above may be independently implemented, but implemented in a combination (or merge) form of some of the proposed schemes. A rule is defined so that the BS notifies, to the UE, information regarding whether to apply the proposed methods (or information on rules of the proposed methods) through a signal (e.g., a physical layer signal or a higher layer signal) defined in advance. A higher layer may include, for example, one or more of functional layers such as MAC, RLC, RRC, and SDAP.

The methods, embodiments or descriptions for implementing the method proposed in the present disclosure may be applied separately, or one or more methods (or embodiments or descriptions) may be applied in combination.

Although the embodiments described above have been described using the terms such as the RO, the RO group, etc., this is for convenience of description. The embodiments described above may be expressed differently in terms of repetition of PRACH transmissions by utilizing the existing defined terms (e.g., valid PRACH occasions). For example, the embodiments described above may be replaced with operation/expressions based on Table 7 below, which may be applied.

[Table 7]

| |
|---|
| 8.1 Random access preamble |

(continued)

- A number of $N_{preamble}^{rep} > 1$ preamble repetitions for the PRACH transmission if the UE would transmit the PRACH with repetitions.

For a PRACH transmission with $N_{preamble}^{rep}$ preamble repetitions, all respective valid PRACH occasions are consecutive in time, use same frequency resources, and are associated with a same SS/PBCH block index.

For a PRACH transmission with $N_{preamble}^{rep}$ preamble repetitions, a time period, starting from frame 0, is the smallest integer number of SS/PBCH block to PRACH occasion association pattern periods such that $N_{Tx}^{SSB}$ SS/PBCH block indexes are mapped at least once to $N_{preamble}^{rep}$ PRACH occasions within the time period for each configured $N_{preamble}^{rep}$ number of preamble repetitions. The set of $N_{preamble}^{rep}$ PRACH occasions for a PRACH transmission repeats every time period.

For a PRACH transmission with $N_{preamble}^{rep}$ preamble repetitions within a time period for $N_{preamble}^{rep}$ preamble repetitions associated with an SS/PBCH block

- if *TimeOffsetBetweenStartingRO* is provided, for each frequency resource index for frequency multiplexed PRACH occasions,

 - the first valid PRACH occasion of the first $N_{preamble}^{rep}$ preamble repetitions is the first valid PRACH occasion

 - the first valid PRACH occasion of subsequent $N_{preamble}^{rep}$ preamble repetitions is after *TimeOffsetBetweenStartingRO* consecutive valid PRACH occasions in time from the first valid PRACH occasion corresponding to the previous $N_{preamble}^{rep}$ preamble repetitions

- otherwise,

 - the first valid PRACH occasion of the first $N_{preamble}^{rep}$ preamble repetitions is the first valid PRACH occasion

 - the first valid PRACH occasion of subsequent $N_{preamble}^{rep}$ preamble repetitions, if any, is determined after the ROs determined for the previous $N_{preamble}^{rep}$ preamble repetitions according to an ordering of valid PRACH occasions

- first, in increasing order of frequency resource indexes for frequency multiplexed PRACH occasions second, in increasing order of time resource indexes for time multiplexed PRACH occasions

Referring to Table 7, the terms according to the embodiments described above may be replaced as follows.

As an example, the 'RO group' may be replaced with '$N_{preamble}^{rep}$ preamble repetitions'. The 'fist RO group' may be replaced with 'first $N_{preamble}^{rep}$ preamble repetitions'.

As an example, the 'starting RO' may be replaced with 'first valid PRACH occasion of the first $N_{preamble}^{rep}$ preamble repetitions'.

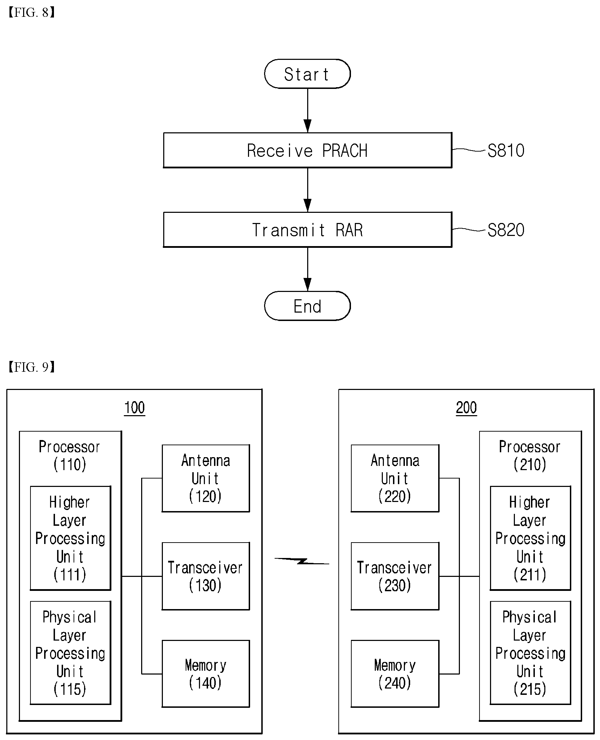

As an example, 'ROs for PRACH repeated transmissions (e.g., multiple transmissions of PRACH) (e.g., starting RO and remaining ROs)' may be replaced with PRACH occasions (or valid PRACH occasions) for $N_{preamble}^{rep}$ repetitions of PRACH transmission'. In terms of implementation, the operations (e.g., operations related to the ROs for repeated transmissions of the PRACH) of the BS/UE according to the embodiments described above may be processed by devices (e.g., processors 110 and 210 in FIG. 9) in FIG. 9 to be described below.

Further, the operations (e.g., operations related to the ROs for repeated transmissions of the PRACH) of the BS/UE according to the embodiment described above may also be stored in memories (e.g., 140 and 204 in FIG. 9) in the form of an instruction/program (e.g., instruction or executable code) for driving at least one processor (e.g., 110 and 210 in FIG. 9).

Hereinafter, the embodiments described above will be described in detail with reference to FIGS. 7 and 8 in terms of the operations of the UE and the BS. Methods to be described below are just distinguished for convenience and it is needless to say that some components of any one method may be substituted with some components of another method or may be applied in combination with each other.

FIG. 7 is a flowchart for describing a method performed by a user equipment (UE) according to an embodiment of the present disclosure.

Referring to FIG. 7, a method performed by a UE in a wireless communication system according to an embodiment of the present disclosure includes a PRACH transmission step S710 and an RAR reception step S720.

In S710, the UE transmits, to a BS, a PRACH based on at least one physical random access channel (PRACH) occasion (RO). The PRACH may be based on a Type-1 random access procedure or a Type-2 random access procedure. As an example, the PRACH may be transmitted based on Table 1 above.

According to an embodiment, the at least one RO may include a plurality of ROs belonging to an RO group for multiple transmissions of the PRACH. The multiple transmissions of the PRACH may mean repeated transmissions of the PRACH.

According to an embodiment, the plurality of ROs may be related to a same synchronization signal/physical broadcast channel block index (SS/PBCH block index).

According to an embodiment, the plurality of ROs may include i) a first RO and ii) one or more second ROs. As an example, the first RO may be a starting RO of the first RO group, and the one or more second ROs may be remaining ROs of the RO group. As an example, the first RO may be based on one of ROs frequency division multiplexed (FDMed) in one time instance. As a specific example, based on the RO group being a first RO group among a plurality of RO groups, the first RO may be an RO related to a lowest frequency resource index among the FDMed ROs.

According to an embodiment, the one or more second ROs may include ROs determined in an increasing order of time resource indexes after the first RO, based on a frequency resource index related to the first RO. The frequency resource index related to the first RO may be related to a resource block (RB).

According to an embodiment, a frequency resource index related to the one or more second ROs may be the same as the frequency resource index related to the first RO. As an example, the RO group may include ROs TDMed based on the same frequency resource index. As an example, a frequency domain location (or starting RB) of the first RO may be the same as a frequency domain location (or starting RB) of the one or more second ROs.

According to an embodiment, the RO group may be one of the plurality of RO groups related to the same SS/PBCH block index. A first RO of a first RO group among the plurality of RO groups may be related to a lowest frequency resource index. For example, referring to FIG. 6, a first RO (1st starting RO) of a first RO group (1st RO group) among four RO groups may be related to the lowest frequency resource index.

According to an embodiment, the plurality of RO groups may include RO groups arranged based on a predefined time/frequency domain pattern (e.g., a frequency hopping pattern).

For example, the plurality of RO groups may be based on different frequency resource indices and/or different time resource indices. That is, frequency resource indexes and/or time resource indexes related to respective starting RO among the plurality of RO groups may be different. A frequency resource index and/or a time resource index related to a first RO of one of the plurality of RO groups may be different from a frequency resource index and/or a time resource index related to a first RO of another one among the plurality of RO groups. Specifically, a frequency resource index and/or a time resource index related to a starting RO of an N-1th RO group among the plurality of RO groups may be different from a frequency resource index and/or a time resource index related to a starting Ro of an Nth RO group among the plurality of RO groups.

As an example, a first RO group (or a first RO (starting RO) of the first RO group) among the plurality of RO groups may be related to a lowest frequency resource index. A first RO of each of the plurality of RO groups may be i) determined in an increasing order of a frequency resource index with respect to a same time resource index, and ii) then determined in an ascending order of a time resource index with respect to a same frequency resource index.

The embodiments described above have been described using the terms 'RO group' and 'RO', but this is for convenience of description and may be replaced with other terms (terms based on Table 7). The terms/features according to the embodiments described above may be expressed differently as follows.

As an example, 'the first RO and one or more second ROs belonging to the RO group' may be replaced with 'valid PRACH occasions (or N PRACH occasions) for N repetitions of transmission of a PRACH (e.g., N repetitions, or N preamble repetitions, where N > 1)'. The N may be based on the repetition number described above and may also be referred to as the number of preamble repetitions.

As an example, 'the first RO and one or more second ROs determined for repeated transmissions' may be replaced with 'ROs (or PRACH occasions) determined for N repetitions'.

One or more second ROs belonging to the RO group related to the same SS/PBCH block index is determined in an increasing order of a time resource index based on a frequency resource index (i.e., a same frequency resource index0 related to a first RO. Such a feature may be expressed as follows. As an example, the valid PRACH occasions (or N PRACH occasions) i) are consecutive in a time domain, ii) uses a same resource(s), and iii) is related to a same SS/PBCH block index.

As an example, the 'RO group' may be replaced with 'N repetitions' (or N preamble repetitions). As an example, the 'first RO group' may be replaced with 'first N repetitions or first N preamble repetitions'.

As an example, the 'first RO (starting RO)' may be replaced with a first valid PRACH occasion. For example, the 'first RO of the first RO group' may be replaced with 'a first valid PRACH occasion of first N repetitions'.

As an example, a feature related to the arrangement of the RO groups (the first RO of each RO group) described above may be expressed as a feature related to the arrangement of the first valid PRACH occasion of N repetitions of PRACH transmission.

Specifically, the first valid PRACH occasion of the first N repetitions may be related to the lowest frequency resource index. A first valid PRACH occasion of subsequent N repetitions may be determined as follows. A first valid PRACH occasion of each N repetitions after the first N repetitions may be i) determined in an increasing order of a frequency resource index with respect to a same time resource index, and ii) then determined in an increasing order of a time resource index with respect to a same frequency resource index.

In other words, the frequency resource index and/or the time resource index related to the first valid PRACH occasion of N repetitions may be different from a frequency resource index and/or a time resource index related to a first valid PRACH occasion of previous N repetitions. In S720, the UE receives a random access response (RAR) from the BS. The RAR may be based on Msg2 of the Type-1 random access procedure or MsgB of the Type-2 random access procedure.

The method may further include a configuration information receiving step. Specifically, the UE receives configuration information related to the PRACH from the BS. According to an embodiment, the configuration information may include information for a number of multiple transmissions. The number of multiple transmissions may be based on the repetition number configured/indicated through the higher layer signaling in the embodiment described above. For example, the number of multiple transmissions may mean 'the number of multiple PRACH transmissions' of Table 6. The configuration information receiving step may be performed before S710.

The number of plurality of ROs may be based on the number of multiple transmissions. As an example, the number of plurality of ROs may be the same as the number of multiple transmissions. Specifically, when the number of multiple transmissions is 2, the number of plurality of ROs may be 2.

The operations based on S710 and S720 and the configuration information receiving step described above may be implemented by the device of FIG. 9. For example, the UE 200 may control one or more transceivers 230 and/or one or more memories 240 to perform the operations based on steps S710 and S720 and the configuration information receiving step.

Hereinafter, the embodiments described below will be specifically described in terms of the operation of the BS.

S810 and S820, and a configuration information transmitting step to be described below correspond to S710 and S720, and the configuration information receiving step described in FIG. 7. By considering the correspondence relationship, redundant descriptions are omitted. That is, a specific description of a BS operation described below may be replaced with the description/example of FIG. 7 corresponding to the operation. As an example, the description/embodiment of S710 and S720 of FIG. 7 may be additionally applied to BS operations of S810 and S820 to be described below. As an example, the description/embodiment of the UE operation in the configuration information receiving step of FIG. 7 may be additionally applied to a BS operation in a configuration information transmitting step to be described below.

FIG. 8 is a flowchart for describing a method performed by a base station according to another embodiment of the present disclosure.

Referring to FIG. 8, a method performed by a BS in a wireless communication system according to another embodiment of the present disclosure includes a PRACH receiving step S810 and an RAR transmitting step S720.

In S810, the BS receives, from the UE, a PRACH based on at least one physical random access channel (PRACH) occasion (RO).

In S440, the BS transmits a random access response (RAR) to the UE.

The method may further include a configuration information transmitting step. Specifically, the BS transmits configuration information related to the PRACH to the UE.

The operations based on S810 and S820 and the configuration information transmitting step described above may be implemented by the device of FIG. 9. For example, the BS 100 may control one or more transceivers 130 and/or one or more memories 140 to perform the operations based on S810 and S820 and the configuration information transmitting step.

A device to which an embodiment of the present disclosure is applicable (a device implementing the method/operation according to an embodiment of the present disclosure) is described below with reference to FIG. 9.

FIG. 9 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) in a wireless communication system, the method comprising:

transmitting a physical random access channel (PRACH) based on at least one PRACH occasion (RO); and
receiving a random access response (RAR),
wherein the at least one RO includes a plurality of ROs belonging to an RO group for multiple transmissions of the PRACH,
wherein the plurality of ROs are related to a same synchronization signal/physical broadcast channel block index (SS/PBCH block index),
wherein the plurality of ROs include i) a first RO and ii) one or more second ROs, and
wherein the one or more second ROs include ROs determined in an increasing order of time resource indexes after the first RO, based on a frequency resource index related to the first RO.

2. The method of claim 1, wherein the first RO is a starting RO of the RO group, and
wherein the one or more second ROs are remaining ROs of the RO group.

3. The method of claim 1, wherein a frequency resource index related to the one or more second ROs is the same as the frequency resource index related to the first RO.

4. The method of claim 1, wherein the frequency resource index related to the first RO is related to a resource block (RB).

5. The method of claim 1, wherein the RO group is one of a plurality of RO groups related to the same SS/PBCH block index, and
wherein a first RO of a first RO group among the plurality of RO groups is related to a lowest frequency resource index.

6. The method of claim 5, wherein a first RO of each of the plurality of RO groups is i) determined in an increasing order of a frequency resource index with respect to a same time resource index, and ii) then determined in an increasing order of a time resource index with respect to a same frequency resource index.

7. The method of claim 5, wherein a frequency resource index and/or a time resource index related to a first RO of one of the plurality of RO groups are/is different from a frequency resource index and/or a time resource index related to a first RO of another one among the plurality of RO groups.

8. The method of claim 1, wherein the first RO is based on one of ROs frequency division multiplexed (FDMed) in one time instance.

9. The method of claim 1, further comprising:

receiving configuration information related to the PRACH,
wherein the configuration information includes information for a number of multiple transmissions, and
wherein the number of plurality of ROs is based on the number of multiple transmissions.

10. A user equipment operating in a wireless communication system, the UE comprising:

one or more transceivers,
one or more processors; and
one or more memories operably connectable to the one or more processors, and storing instructions of configuring the one or more processors to perform operations based on being executed by the one or more processors,
wherein the operations include
transmitting a physical random access channel (PRACH) based on at least one PRACH occasion (RO), and
receiving a random access response (RAR), and
wherein the at least one RO includes a plurality of ROs belonging to an RO group for multiple transmissions of the PRACH,
wherein the plurality of ROs are related to a same synchronization signal/physical broadcast channel block index (SS/PBCH block index),
wherein the plurality of ROs include i) a first RO and ii) one or more second ROs, and

wherein the one or more second ROs include ROs determined in an increasing order of time resource indexes after the first RO, based on a frequency resource index related to the first RO.

11. A device comprising: one or more memories and one or more processors functionally connected to the one or more memories,

wherein the one or more memories include instructions of configuring the one or more processors to perform operations based on being executed by the one or more processors, and
wherein the operations include
transmitting a physical random access channel (PRACH) based on at least one PRACH occasion (RO), and receiving a random access response (RAR), and
wherein the at least one RO includes a plurality of ROs belonging to an RO group for multiple transmissions of the PRACH,
wherein the plurality of ROs are related to a same synchronization signal/physical broadcast channel block index (SS/PBCH block index),
wherein the plurality of ROs include i) a first RO and ii) one or more second ROs, and
wherein the one or more second ROs include ROs determined in an increasing order of time resource indexes after the first RO, based on a frequency resource index related to the first RO.

12. One or more non-transitory computer-readable media storing one or more instructions, wherein the one or more instructions executable by one or more processors are configured to allow the one or more processors to perform operations, and wherein the operations include

transmitting a physical random access channel (PRACH) based on at least one PRACH occasion (RO), and receiving a random access response (RAR), and
wherein the at least one RO includes a plurality of ROs belonging to an RO group for multiple transmissions of the PRACH, wherein the plurality of ROs are related to a same synchronization signal/physical broadcast channel block index (SS/PBCH block index),
wherein the plurality of ROs include i) a first RO and ii) one or more second ROs, and
wherein the one or more second ROs include ROs determined in an increasing order of time resource indexes after the first RO, based on a frequency resource index related to the first RO.

13. A method performed by a base station in a wireless communication system, the method comprising:

receiving a physical random access channel (PRACH) based on at least one PRACH occasion (RO), and transmitting a random access response (RAR),
wherein the at least one RO includes a plurality of ROs belonging to an RO group for multiple transmissions of the PRACH by a UE,
wherein the plurality of ROs are related to a same synchronization signal/physical broadcast channel block index (SS/PBCH block index),
wherein the plurality of ROs include i) a first RO and ii) one or more second ROs, and
wherein the one or more second RO include ROs determined in an increasing order of time resource indexes after the first RO, based on a frequency resource index related to the first RO.

14. A base station operating in a wireless communication system, the base station comprising:

one or more transceivers,
one or more processors; and
one or more memories operably connectable to the one or more processors, and storing instructions of configuring the one or more processors to perform operations based on being executed by the one or more processors,
wherein the operations include
receiving a physical random access channel (PRACH) based on at least one PRACH occasion (RO), and transmitting a random access response (RAR), and
wherein the at least one RO includes a plurality of ROs belonging to an RO group for multiple transmissions of the PRACH by a UE,
wherein the plurality of ROs are related to a same synchronization signal/physical broadcast channel block index (SS/PBCH block index),

wherein the plurality of ROs include i) a first RO and ii) one or more second ROs, and
wherein the one or more second ROs includes ROs determined in an increasing order of time resource indexes after the first RO, based on a frequency resource index related to the first RO.

【FIG. 1】

INITIAL CELL SEARCH | SYSTEM INFORMATION RECEPTION | RANDOM ACCESS PROCEDURE | GENERAL DL/UL Tx/Rx

PSS/SSS& [DLRS]& PBCH

PDCCH/ PDSCH (BCCH)

PRACH | PDCCH/ PDSCH | PUSCH | PDCCH/ PDSCH

PDCCH/ PDSCH | PUSCH/ PUCCH

S101    S102    S103    S104    S105    S106    S107    S108

· DL/UL ACK/NACK
· UE CQI/PMI RI REPORT
USING PUSCH AND PUCCH

【FIG. 2】

239

192
182

Subcarrier Number

56
47

0

P B C H

P S S

P B C H

S S S

P B C H

P B C H

0    1    2    3

OFDM symbol number

【FIG. 3】

SSB periodicity(default:20ms)

| 5ms window | | | | |
|---|---|---|---|---|

| SSB#1 | SSB#2 | · · · | SSB#L |
|---|---|---|---|

SSB burst set

【FIG. 4】

RACH slot

| 0 | 1 | 2 | 3 | 4 | 5 | 6 | 7 | 8 | 9 | 10 | 11 | 12 | 13 |
|---|---|---|---|---|---|---|---|---|---|---|---|---|---|
| A1 | | A1 | | A1 | | A1 | | A1 | | A1 | | Null | |
| A1 | | A1 | | A1 | | A1 | | A1 | | A1/B1 | | | |
| B1 | | B1 | | B1 | | B1 | | B1 | | B1 | | | |
| A2 | | | | A2 | | | | A2 | | | | Null | |
| A2 | | | | A2 | | | | A2/B2 | | | | | |
| A3 | | | | | | A3 | | | | | | Null | |
| A3 | | | | | | A3/B3 | | | | | | | |
| B4 | | | | | | | | | | | | | |
| C0 | | C0 | | C0 | | C0 | | C0 | | C0 | | | |
| C2 | | | | | | C2 | | | | | | | |

(a) Starting OFDM symbol is '0'

RACH slot

| 0 | 1 | 2 | 3 | 4 | 5 | 6 | 7 | 8 | 9 | 10 | 11 | 12 | 13 |
|---|---|---|---|---|---|---|---|---|---|---|---|---|---|
| | Null | A1 | | A1 | | A1 | | A1 | | A1 | | A1 | |
| | Null | A1 | | A1 | | A1 | | A1 | | A1 | | A1/B1 | |
| | Null | B1 | | B1 | | B1 | | B1 | | B1 | | B1 | |
| | Null | A2 | | | | A2 | | | | A2 | | | |
| | Null | A2 | | | | A2 | | | | A2/B2 | | | |
| | Null | A3 | | | | | | A3 | | | | | |
| | Null | A3 | | | | | | A3/B3 | | | | | |
| | Null | B4 | | | | | | | | | | | |
| | Null | C0 | | C0 | | C0 | | C0 | | C0 | | C0 | |
| | Null | C2 | | | | | | C2 | | | | | |

(b) Starting OFDM symbol is '2'

【FIG. 5】

· Contention based

(a)

```
UE                                                    gNB
|                                                      |
|- - - -[        RA preamble (MSG1)        ]- - - ->|
|                                                      |
|<------[        RA response (MSG2)        ]----------|
|                                                      |
|- - - -[   Scheduled Transmission (MSG3)  ]- - - ->|
|                                                      |
|<------[  Contention Resolution (MSG4)    ]----------|
|                                                      |
```

· Contention-free

(b)

```
UE                                                    gNB
|                                                      |
|<- - -[      RA preamble assignment      ]- - - - -|
|                                                      |
|------[        RA preamble (MSG1)        ]--------->|
|                                                      |
|<- - -[        RA response (MSG2)        ]- - - - -|
|                                                      |
```

【FIG. 6】

【FIG. 7】

EP 4 598 240 A1

【FIG. 8】

```
        Start
          |
          v
   Receive PRACH      ~S810
          |
          v
   Transmit RAR       ~S820
          |
          v
         End
```

【FIG. 9】

55

## INTERNATIONAL SEARCH REPORT

International application No.

**PCT/KR2023/013725**

| A. | CLASSIFICATION OF SUBJECT MATTER |
|---|---|

**H04W 74/00**(2009.01)i; **H04W 74/08**(2009.01)i; **H04L 1/08**(2006.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중 전송(multiple transmissions), PRACH, RO 그룹(group), SSB 인덱스 (index), 주파수 다중화(FDM)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>Y | QUALCOMM INCORPORATED. Summary of Maintenance for PRACH procedure. R1-1809845, 3GPP TSG-RAN WG1 94. Gothenburg, Sweden. 23 August 2018.<br>See pages 4-5, 8-9 and 12 and LGE figures 1(a)-(b). | 1-4,10-14<br>5-9 |
| Y | SAMSUNG. Discussion on time/freq-domain enhancements for RACH resources. R1-1904413, 3GPP TSG RAN WG1 #96bis. Xi'an, China. 29 March 2019.<br>See pages 1-3 and figure 1. | 5-9 |
| A | PANASONIC. NR-U PRACH resource enhancement. R1-1904595, 3GPP TSG RAN WG1 #96bis. Xi'an, China. 29 March 2019.<br>See pages 1-4. | 1-14 |
| A | HUAWEI et al. Further discussion on channel structure for 2-step RACH. R1-1903923, 3GPP TSG RAN WG1 Meeting #96bis. Xi'an, China. 29 March 2019.<br>See pages 1-6. | 1-14 |

| ✓ Further documents are listed in the continuation of Box C. | ✓ See patent family annex. |
|---|---|

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search | Date of mailing of the international search report |
|---|---|
| **27 December 2023** | **27 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/013725**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0133423 A (INNOVATIVE TECHNOLOGY LAB CO., LTD.) 08 November 2021 (2021-11-08)<br>    See paragraphs [0243]-[0325] and figures 19-28. | 1-14 |

## INTERNATIONAL SEARCH REPORT
### Information on patent family members

International application No.

**PCT/KR2023/013725**

| Patent document cited in search report | | | Publication date (day/month/year) | Patent family member(s) | | | Publication date (day/month/year) |
|---|---|---|---|---|---|---|---|
| KR | 10-2021-0133423 | A | 08 November 2021 | CN | 115516991 | A | 23 December 2022 |
| | | | | EP | 4145942 | A1 | 08 March 2023 |
| | | | | US | 2023-0085104 | A1 | 16 March 2023 |
| | | | | WO | 2021-221381 | A1 | 04 November 2021 |

Form PCT/ISA/210 (patent family annex) (July 2022)